(19) Europäisches Patentamt
European Patent Office
Office européen des brevets

(11) EP 4 588 971 A1

(12) **EUROPEAN PATENT APPLICATION**
published in accordance with Art. 153(4) EPC

(43) Date of publication:
**23.07.2025 Bulletin 2025/30**

(21) Application number: **23865559.1**

(22) Date of filing: **13.09.2023**

(51) International Patent Classification (IPC):
***C08L 23/06*** *(2006.01)* ***B60J 10/76*** *(2016.01)*
***C08J 3/24*** *(2006.01)* ***C08L 23/10*** *(2006.01)*
***C08L 23/16*** *(2006.01)* ***C08L 23/26*** *(2025.01)*
***C08L 83/04*** *(2006.01)*

(52) Cooperative Patent Classification (CPC):
**B60J 10/76; C08J 3/24; C08L 23/06; C08L 23/10; C08L 23/16; C08L 23/26; C08L 83/04**

(86) International application number:
**PCT/JP2023/033350**

(87) International publication number:
**WO 2024/058210 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.09.2022 JP 2022145973**

(71) Applicant: **Mitsui Chemicals, Inc.**
**Tokyo 104-0028 (JP)**

(72) Inventors:
- **SHIBATA Yasuhiro**
  **Tokyo 104-0028 (JP)**
- **CHIGAMA Kakeru**
  **Ichihara-shi, Chiba 299-0108 (JP)**
- **YAMAMOTO Akihiro**
  **Ichihara-shi, Chiba 299-0108 (JP)**

(74) Representative: **Hoffmann Eitle**
**Patent- und Rechtsanwälte PartmbB**
**Arabellastraße 30**
**81925 München (DE)**

(54) **SLIDING COMPOSITION AND USE THEREOF, AND METHOD FOR PRODUCING SLIDING COMPOSITION**

(57) One aspect of the present invention relates to a sliding composition film or a method for producing a sliding composition, the sliding composition including an ethylene/α-olefin/nonconjugated polyene copolymer (A); a propylene-based random copolymer (B1) and a propylene homopolymer (B2), having a melt flow rate of 0.1 to 4.0 g/10 min; high-density polyethylene (C1) having a density of 940 to 970 kg/$m^3$ and a MFR of 0.1 g/10 min or less; ultra-high molecular weight polyethylene (C2) having an intrinsic viscosity [η] of 10 to 40 dl/g (in decalin at 135°C), an average particle size $D_{50}$ of 22 to 50 μm, and a density of less than 940 kg/$m^3$; and a silicone compound (D) having a kinematic viscosity of 3,000 to 1,000,000 cSt (at 25°C) in each predetermined content, in which the ethylene/α-olefin/nonconjugated polyene copolymer (A) is at least partially cross-linked with a phenolic resin-based cross-linking agent.



Processed by Luminess, 75001 PARIS (FR)

## Description

### Technical Field

One aspect of the present invention relates to a sliding composition, application of the sliding composition, or a method for producing the sliding composition.

### Background Art

Olefinic thermoplastic elastomers are lightweight and facilitate recycling, and do not generate toxic gases when incinerated, so that from the viewpoints of energy saving, resource saving, and further global environmental protection in recent years, they are widely used in, for example, automobile parts, industrial machine parts, electric and electronic components, and building materials, in particular as substitutes for vulcanized rubber. One example of such automobile parts includes a glass run channel.

The glass run channel is a sealing material (guiding member) provided between window glass and a window frame, which is required to have sliding properties with the glass, so that conventionally, there is a thermoplastic elastomer composition in which a silicone-based additive and fine particles consisting of polyethylene, for example, are contained in a thermoplastic elastomer (particularly, a composition having sliding properties is sometimes referred to as a "sliding composition").

Patent Literature 1 describes a configuration (Example 8) in which a glass sliding layer bonded to a glass run channel body contains high-density polyethylene, a non-polar elastomer, and a lubricant (silicone masterbatch).

Patent Literature 2 describes that a glass run channel composed of a composition in which a thermoplastic elastomer was compounded with a silylated polyolefin, has excellent adhesiveness between a substrate layer and a skin layer and abrasion resistance.

Patent Literature 3 describes that a glass run channel composed of a composition in which a thermoplastic elastomer was compounded with fine particles molded of high-density polyethylene and a silicone masterbatch, has an excellent appearance, coefficient of friction, and sliding properties.

### Citation List

### Patent Literature

[Patent Literature 1] JPH10-193985A
[Patent Literature 2] JP2015-189088A
[Patent Literature 3] Japanese Patent No.6976862

### Summary of Invention

### Technical Problem

However, when the present inventors investigated extrusion moldability of an olefinic thermoplastic elastomer composition (sliding composition) containing a silicone-based additive and fine particles composed of polyethylene, for example, it has been found that the composition compounded with the silicone-based additive may have caused problems in adhesion at corners, and have caused a foreign matter called die drool to adhere to a die of a molding machine, thereby impairing processability. Moreover, it has also been found that large recesses and protrusions have been molded on a surface of a molded product, impairing the appearance of the molded product. Furthermore, it has been found that there is room for improvement in heat deterioration resistance and sliding properties.

One aspect of the present invention provides a sliding composition capable of producing a molded body such as a glass run channel that achieves both sliding properties and adhesiveness at corners and is excellent in balance of, for example, extrusion moldability, appearance, and heat deterioration resistance, and a method for producing the sliding composition.

### Solution to Problem

The configuration examples of the present invention are as follows:

[1] A sliding composition, comprising

7.0% by mass or more of an ethylene/α-olefin/nonconjugated polyene copolymer (A);
6.0% by mass or more of a propylene-based random copolymer (B1) having a melt flow rate of 0.1 to 4.0 g/10 min measured at 190°C under a load of 2.16 kgf;
10.0% by mass or more of a propylene homopolymer (B2) having a melt flow rate of 0.1 to 4.0 g/10 min measured at 190°C under a load of 2.16 kgf;
15.0% by mass or more of high-density polyethylene (C1) having a density of 940 to 970 kg/$m^3$ and a melt flow rate of 0.1 g/10 min or less measured at 190°C under a load of 2.16 kgf;
10.0% by mass or more of ultra-high molecular weight polyethylene (C2) having an intrinsic viscosity [η] of 10 to 40 dl/g, as measured in a decalin solvent at 135°C, an average particle size $D_{50}$ of 22 to 50 μm, and a density of less than 940 kg/$m^3$; and
5.0 to 8.0% by mass of a silicone compound (D) having a kinematic viscosity of 3,000 to 1,000,000 cSt at 25°C (provided that a total content of the components (A), (B1), (B2), (C1), (C2) and (D) is 100.0% by mass or less);
wherein the ethylene/α-olefin/nonconjugated polyene copolymer (A) is at least partially cross-linked with a phenolic resin-based cross-linking agent.

[2] The sliding composition according to [1], further comprising 0.1 to 10.0% by mass of a softener (E) (provided that a total content of the components (A), (B1), (B2), (C1), (C2), (D) and (E) is 100.0% by mass or less),
wherein the ethylene/α-olefin/nonconjugated polyene copolymer (A) has a weight-average molecular weight of 280,000 or more and an intrinsic viscosity [η] measured in decalin at 135°C of 3.4 dl/g or more, a content of constituent units derived from ethylene is 70% by mass or less (provided that a total content of constituent units derived from ethylene and constituent units derived from the α-olefin is 100% by mass), and a content of constituent units derived from the nonconjugated polyene in all constituent units of the copolymer (A) is 6.0% by mass or less.
[3] The sliding composition according to [1] or [2], wherein Shore D hardness (after 5 seconds) measured in accordance with ISO 7619 is 30 to 60.
[4] The sliding composition according to any one of [1] to [3], where a content of the ethylene/α-olefin/nonconjugated polyene copolymer (A) is 7.0 to 10.0% by mass.
[5] The sliding composition according to any one of [1] to [4], wherein a total content of the propylene-based random copolymer (B1) and the propylene homopolymer (B2) is 20.0% by mass or more.
[6] The sliding composition according to any one of [1] to [5], wherein a content of the propylene-based random copolymer (B1) is 9.0 to 15.0% by mass, and the propylene-based random copolymer (B1) has a density of 900 to 920 kg/$m^3$.
[7] The sliding composition according to any one of [1] to [6], wherein a content of the propylene homopolymer (B2) is 10.0 to 18.0% by mass, and the propylene homopolymer (B2) has a density of 900 to 920 kg/$m^3$.
[8] The sliding composition according to any one of [1] to [7], wherein a mass ratio [(B2)/(B1)] of the propylene homopolymer (B2) to the propylene-based random copolymer (B1) is 1.0 to 3.0.
[9] The sliding composition according to any one of [1] to [8], wherein a content of the ultra-high molecular weight polyethylene (C2) is 10.0 to 30.0% by mass, and the ultra-high molecular weight polyethylene (C2) has an average particle size $D_{50}$ of 22 to 30 μm.
[10] A molded body obtained by molding the sliding composition according to any one of [1] to [9].
[11] A glass run channel comprising the molded body according to [10].
[12] A method for producing a sliding composition, the sliding composition comprising:

7.0% by mass or more of an ethylene/α-olefin/nonconjugated polyene copolymer (A);
6.0% by mass or more of a propylene-based random copolymer (B1) having a melt flow rate of 0.1 to 4.0 g/10 min measured at 190°C under a load of 2.16 kgf;
10.0% by mass or more of a propylene homopolymer (B2) having a melt flow rate of 0.1 to 4.0 g/10 min measured at 190°C under a load of 2.16 kgf;
15.0% by mass or more of high-density polyethylene (C1) having a density of 940 to 970 kg/$m^3$ and a melt flow rate of 0.1 g/10 min or less measured at 190°C under a load of 2.16 kgf;
10.0% by mass or more of ultra-high molecular weight polyethylene (C2) having an intrinsic viscosity [η] of 10 to 40 dl/g, as measured in a decalin solvent at 135°C, an average particle size $D_{50}$ of 22 to 50 μm, and a density of less than 940 kg/$m^3$; and
5.0 to 8.0% by mass of a silicone compound (D) having a kinematic viscosity of 3,000 to 1,000,000 cSt at 25°C (provided that a total content of the components (A), (B1), (B2), (C1), (C2) and (D) is 100.0% by mass or less),
wherein the ethylene/α-olefin/nonconjugated polyene copolymer (A) is at least partially cross-linked,
the method comprising the step of cross-linking the ethylene/α-olefin/nonconjugated polyene copolymer (A) at

least partially with a phenol resin-based cross-linking agent.

## Advantageous Effect of Invention

According to the sliding composition according to one aspect of the present invention, a molded body such as a glass run channel capable of achieving both sliding properties and adhesiveness at corners and being excellent in balance of extrusion moldability, appearance, and heat deterioration resistance, can be obtained.

## Description of Embodiments

One aspect of the present invention will be specifically described below, however, the present invention is not limited to these examples.

<<Sliding composition>>

The sliding composition according to one aspect of the present invention (hereinafter also simply referred to as "the present composition") includes

an ethylene/α-olefin/nonconjugated polyene copolymer (A);
a propylene-based random copolymer (B1) having a melt flow rate of 0.1 to 4.0 g/10 minutes measured at 190°C under a load of 2.16 kgf;
a propylene homopolymer (B2) having a melt flow rate of 0.1 to 4.0 g/10 min measured at 190°C under a load of 2.16 kgf;
high-density polyethylene (C1) having a density of 940 to 970 kg/$m^3$ and a melt flow rate of 0.1 g/10 min or less measured at 190°C under a load of 2.16 kgf;
ultra-high molecular weight polyethylene (C2) having an intrinsic viscosity [η] of 10 to 40 dl/g, as measured in a decalin solvent at 135°C, an average particle size $D_{50}$ of 22 to 50 μm, and a density of less than 940 kg/$m^3$; and
a silicone compound (D) having a kinematic viscosity of 3,000 to 1,000,000 cSt at 25°C.

The present composition is characterized in that the ethylene/α-olefin/nonconjugated polyene copolymer (A) is at least partially cross-linked with a phenolic resin-based cross-linking agent.

The content of component (A) in the present composition is 7.0% by mass or more, preferably 7.0 to 10.0% by mass, more preferably 7.0 to 9.0% by mass, and still more preferably 7.0 to 8.0% by mass, relative to 100.0% by mass of the present composition.

The content of component (B1) in the present composition is 6.0% by mass or more, preferably 6.0 to 15.0% by mass, more preferably 6.0 to 13.0% by mass, and still more preferably 6.0 to 11.0% by mass, relative to 100.0% by mass of the present composition.

The content of component (B2) in the present composition is 10.0% by mass or more, preferably 10.0 to 18.0% by mass, more preferably 12.0 to 17.5% by mass, and still more preferably 13.0 to 17.0% by mass, relative to 100.0% by mass of the present composition.

Herein, the total content of the component (B1) and component (B2) is preferably 20.0% by mass or more and more preferably 20.0 to 25.0% by mass, relative to 100.0% by mass of the present composition. A mass ratio of the component (B1) to the component (B2) [(B2)/(B1)] is preferably 1.0 to 3.0 and more preferably 1.2 to 2.8.

The content of component (C1) in the present composition is 15.0% by mass or more, preferably 15.0 to 40.0% by mass, more preferably 20.0 to 40.0% by mass, and still more preferably 25.0 to 35.0% by mass, relative to 100.0% by mass of the present composition.

The content of component (C2) in the present composition is 10.0% by mass or more, preferably 10.0 to 30.0% by mass, more preferably 10.0 to 25.0% by mass, and still more preferably 10.0 to 20.0% by mass, relative to 100.0% by mass of the present composition.

Herein, the total content of components (C1) and (C2) is preferably 30.0% by mass or more and more preferably 30.0 to 50.0% by mass, relative to 100.0% by mass of the present composition. A mass ratio of the component (C1) to the component (C2) [(C2)/(C1)] is preferably 0.1 to 1.0, and more preferably 0.2 to 0.7.

The content of component (D) in the present composition is 5.0 to 8.0% by mass, preferably 5.5 to 8.0% by mass, more preferably 6.0 to 8.0% by mass, and still more preferably 6.0 to 7.5% by mass, relative to 100.0% by mass of the present composition.

The total content of the components (A), (B1), (B2), (C1), (C2), and (D) is 100.0% by mass or less.

The present composition compounded with (containing) the components (A), (B1), (B2), (C1), (C2), and (D) in the above-described proportion, can produce a molded body capable of achieving both sliding properties and adhesiveness at

corners, and also being excellent in balance of, for example, extrusion moldability, appearance, and heat deterioration resistance.

The ethylene/α-olefin/nonconjugated polyene copolymer (A) compounded in an amount of less than the lower limit tends to develop wrinkles without flexibility, whereas the amount exceeding the upper limit tends to deteriorate sliding properties.

The propylene-based resins (B) compounded in each amount of less than the lower limit tend to worsen formability, whereas each amount exceeding the upper limit tends to develop wrinkles without flexibility.

The high-density polyethylene (C1) compounded in an amount of less than the lower limit tends to deteriorate sliding properties, whereas the amount exceeding the upper limit tends to cause hardening, resulting in developing wrinkles.

The ultra-high molecular weight polyethylene (C2) compounded in an amount of less than the lower limit tends to reduce elongation and deteriorate low-temperature properties, whereas the amount exceeding the upper limit tends to cause softening, resulting in deterioration of the sliding properties.

The silicone compound (D) compounded in an amount of less than the lower limit tends to deteriorate sliding properties, whereas the amount exceeding the upper limit tends to reduce adhesiveness at corners of the obtained molded body and also to deteriorate low-temperature impact strength.

Each component will be described in detail below.

[Ethylene/α-olefin/nonconjugated polyene copolymer (A)]

The ethylene/α-olefin/nonconjugated polyene copolymer (A) is a copolymer including constituent units derived from ethylene, an α-olefin other than ethylene, and a nonconjugated polyene.

The present composition may contain one type of copolymer (A) alone, or may contain two or more types thereof.

The α-olefin is usually an α-olefin having 3 to 20 carbon atoms, and specific examples thereof include, for example, propylene, 1-butene, 1-pentene, 4-methylpentene-1, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyldecene-1, 11-methyldodecene-1, and 12-ethyltetradecene-1. Among these, preferred are propylene, 1-butene, 4-methylpentene-1, 1-hexene, and 1-octene, and particularly preferred is propylene.

These α-olefins may be used alone, or used in combination of two or more thereof.

Specific examples of the nonconjugated polyenes include, for example, chain nonconjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene, 7-methyl-1,6-octadiene, 8-methyl-4-ethylidene-1,7-nonadiene, and 4-ethylidene-1,7-undecadiene; cyclic nonconjugated dienes such as methyltetrahydroindene, 5-ethylidene-2-norbornene (ENB), 5-methylene-2-norbornene, 5-isopropylidene-2-norbornene, 5-vinylidene-2-norbornene, 6-chloromethyl-5-isopropenyl-2-norbornene, 5-vinyl-2-norbornene, 5-isopropenyl-2-norbornene, 5-isobutenyl-2-norbornene, cyclopentadiene, and norbornadiene; and trienes such as 2,3-diisopropylidene-5-norbornene, 2-ethylidene-3-isopropylidene-5-norbornene, 2-propenyl-2,2-norbornadiene, and 4-ethylidene-8-methyl-1,7-nonadiene. Among these, 5-ethylidene-2-norbornene, 5-vinyl-2-norbornene, cyclopentadiene, and 4-ethylidene-8-methyl-1,7-nonadiene are preferred.

The monomers constituting the copolymer (A) (for example, ethylene, an α-olefin other than ethylene, and a nonconjugated polyene) may be solely monomers obtained from biomass-derived raw materials, may be solely monomers obtained from fossil fuel-derived raw materials, or may be mixtures of monomers obtained from biomass-derived raw materials of raw materials and monomers obtained from fossil fuel-derived raw materials.

The content of constituent units derived from ethylene in the copolymer (A) is preferably 70% by mass or less, more preferably 55 to 70% by mass, and still more preferably 60 to 69% by mass, when a sum of the content of constituent units derived from ethylene and the content of constituent units derived from an α-olefin having 3 to 20 carbon atoms is taken as 100% by mass. Also, when a sum of the content of constituent units derived from ethylene and the content of constituent units derived from an α-olefin having 3 to 20 carbon atoms is taken as 100 mol%, the content of constituent units derived from ethylene is preferably 60 to 80 mol% and more preferably 70 to 80 mol%.

The content of constituent units derived from the α-olefin having 3 to 20 carbon atoms in the copolymer (A) is preferably 30% by mass or more, more preferably 30 to 45% by mass, and still more preferably 31 to 40% by mass, when a sum of the content of constituent units derived from ethylene and the content of constituent units derived from the α-olefin having 3 to 20 carbon atoms is taken as 100% by mass. Also, when a sum of the content of constituent units derived from ethylene and the content of constituent units derived from the α-olefin having 3 to 20 carbon atoms is taken as 100 mol%, the content of constituent units derived from the α-olefin having 3 to 20 carbon atoms is preferably 20 to 40 mol%, and more preferably 20 to 30 mol%.

Within the above ranges of the content of constituent unites derived from ethylene and the content of constituents units derived from the α-olefin having 3 to 20 carbon atoms, a sliding composition excellent in mechanical properties, rubber elasticity, cold resistance, and processability tends to be obtained. The content of constituent units derived from

ethylene of 70% by mass or less and the content of constituents units derived from the α-olefin having 3 to 20 carbon atoms of 30% by mass or more, allow the sliding composition to have a likelihood of being excellent in flexibility, rubber elasticity at low temperatures, and processability. The content of constituent units derived from ethylene of 55% by mass or more and the content of constituent units derived from the α-olefin having 3 to 20 carbon atoms of 45% by mass or less allows the sliding composition tends to have a likelihood of being excellent in mechanical properties and rubber elasticity at high temperatures.

The content of constituents units derived from the nonconjugated polyene in all constituent units of the copolymer (A) is preferably 6.0% by mass or less, more preferably 2.0 to 6.0% by mass, and still more preferably 3.0 to 6.0% by mass. Within the above range of the content of constituent units derived from the nonconjugated polyene, an appearance after extrusion and heat deterioration resistance tend to be superior.

The content of each constituent unit of the copolymer (A) can be measured by a $^{13}$C-NMR method and, for example, according to the method described later and the method described in "Polymer Analysis Handbook" (First Edition, Publisher, Asakura Publishing Co., Ltd., Publication Year 2008, pp. 184-211), peaks can be identified and quantified.

The copolymer (A) has an intrinsic viscosity [η] measured in decalin at 135°C of preferably 3.4 dl/g or more, more preferably 3.4 to 6.0 dl/g, and still more preferably 3.4 to 5.5 dl/g. Within the above range of the intrinsic viscosity [η] measured in decalin at 135°C, a sliding composition having an excellent balance of mechanical properties, rubber elasticity, and processability tends to be obtained.

The intrinsic viscosity [η] is measured by the method described in Examples to be described later.

An iodine value of the copolymer (A) measured in accordance with JIS K 0070:1992 is preferably 2 to 50 g/100 g, more preferably 5 to 40 g/100 g, and still more preferably 7 to 30 g/100 g. The iodine value below the above-described lower limit value lowers cross-linking efficiency in the thermoplastic elastomer described later, and may reduce the rubber elasticity. The iodine value exceeding the upper limit thereof, increases the cross-linking density too high, reducing the elongation, and may deteriorate a balance of physical properties.

The weight-average molecular weight (Mw) of the copolymer (A) measured by GPC is preferably 280,000 or more and more preferably 280,000 to 500,000. A molecular weight distribution (Mw/Mn) is usually 1.5 to 50, preferably 1.8 to 30, and more preferably 2.0 to 6. The molecular weight distribution below the above range reduces the content of low molecular weight components, and may lower processability. The molecular weight distribution above the above range increases the content of low molecular weight components, and may deteriorate fogging resistance.

The Mooney viscosity ($ML_{1+4}$) of the copolymer (A) at 100°C measured in accordance with JIS K 6395:2010 is preferably 15 to 400 and more preferably 30 to 250. Within the above range of the Mooney viscosity, a balance between mechanical properties and processability tends to be excellent.

The copolymer (A) for use may be a commercially available product or may be produced by a conventionally known method. Conventionally known methods include those described in, for example, "Polymer Production Process (published by Kogyo Chosakai Publishing Co., Ltd., pp. 309-330)" or in JPH9-71617A, JPH9-71618A, JPH9-208615A, JPH10-67823A, JPH10-67824A, JPH10-110054A, WO 2009/081792, and WO 2009/081794.

Examples of olefin polymerization catalysts preferably used upon production of the copolymer (A) include, for example,

known Ziegler catalysts consisting of a transition metal compound such as vanadium (V), zirconium (Zr), or titanium (Ti) and an organoaluminum compound (organoaluminum oxy compound) ;

known metallocene catalysts consisting of a metallocene compound of a transition metal selected from Group 4 in the periodic table of elements and an organoaluminum oxy compound or an ionized ionic compound (for example, the metallocene catalyst described in JPH9-40586A);

known metallocene catalysts consisting of a specific transition metal compound and a cocatalyst such as a boron compound (for example, the metallocene catalyst described in WO 2009/072553); and

a transition metal compound catalyst consisting of a specific transition metal compound and a compound that is reacted with an organometallic compound, an organoaluminum oxy compound, or the transition metal compound to form an ion pair (for example, the transition metal compound catalyst described in JP2011-52231A).

In particular, when the metallocene catalyst is used, the nonconjugated polyene is uniformly distributed, making it possible to obtain high cross-linking efficiency even with a small amount of nonconjugated polyene introduced, and the catalyst activity is high, allowing the chlorine content derived from the catalyst to be reduced, which is particularly preferred.

It is to be noted that before mixed with the component other than the copolymer (A) described later, the copolymer (A) may be used after being prepared as a component (α) containing the copolymer (A), such as a copolymer in which a petroleum-based plasticizer (softener) and the copolymer (A) were preliminarily mixed for oil-extended (hereinafter also referred to as "oil-extended rubber"). The petroleum-based plasticizer may be the same plasticizer as the "petroleum-based plasticizer" exemplified in the softener (E) of the section [Other component] described later.

As a method for producing the oil-extended rubber (method of oil extended), a conventionally known method can be employed. Examples thereof include, for example, a method for mechanically kneading the copolymer (A) and a petroleum-based plasticizer using a mixing roll or a Banbury mixer for oil-extended, a method for adding a predetermined amount of a petroleum-based plasticizer to the copolymer (A) and then removing a solvent by a method such as steam stripping, and a method for stirring a mixture of the crumb-like copolymer (A) and a petroleum-based plasticizer with a Henschel mixer, for example to impregnate the plasticizer.

The oil-extended rubber for use may be a commercially available product and examples thereof include Mitsui EPT manufactured by Mitsui Chemicals, Inc., JSR EPR manufactured by JSR Corporation, ESPRENE (registered trademark) manufactured by SUMITOMO CHEMICAL COMPANY, LIMITED, Keltan (registered trademark) manufactured by LANXESS AG, KEP (registered trademark) manufactured by Kumho Polychem Co., Ltd., and NODEL (registered trademark) manufactured by The Dow Chemical Company.

[Propylene-based resin (B)]

The present composition contains a propylene-based random copolymer (B1) and a propylene homopolymer (B2) as the propylene-based resins (B). The propylene-based random copolymer (B1) is a copolymer of propylene and an $\alpha$-olefin (propylene·$\alpha$-olefin copolymer), and is a random copolymer.

The present composition may contain one type of copolymer (B1) alone and one type of polymer (B2) alone, or two or more types thereof.

<Propylene-based random copolymer (B1)>

Examples of $\alpha$-olefins in the propylene·$\alpha$-olefin copolymer (B1) includes, for example, ethylene and an $\alpha$-olefin having 4 to 12 carbon atoms.

Examples of the $\alpha$-olefins having 4 to 12 carbon atoms include linear or branched $\alpha$-olefins such as 1-butene, 1-pentene, 3-methyl-1-butene, 1-hexene, 3-methyl-1-pentene, 4-methyl-1-pentene, 1-octene-1-decene, and 1-dodecene.

The $\alpha$-olefin may be used alone or two or more thereof may be used.

The content of constituent units derived from propylene in the copolymer (B1) is preferably 60 to 99.5 mol%, more preferably 80 to 99 mol%, still more preferably 90 to 98.5 mol%, and particularly preferably 95 to 98 mol%.

Furthermore, the content of constituent units derived from the $\alpha$-olefin in the propylene·$\alpha$-olefin copolymer is preferably 0.5 to 40 mol%, more preferably 1 to 20 mol%, still more preferably 1.5 to 10 mol%, and particularly preferably 2 to 5 mol%.

Herein, a sum of the content of constituent units derived from propylene and the content of constituent units derived from the $\alpha$-olefin is 100 mol%.

The propylene·$\alpha$-olefin copolymer may also contain a small amount (for example, 10 mol % or less relative to all constituent units of the propylene-based copolymer (A)) of constituent units derived from other olefin other than ethylene and an olefin having 3 to 12 carbon atoms.

The other olefin may be used alone or two or more thereof may be used.

The melt flow rate (MFR) of the copolymer (B1) measured in accordance with JIS K 7210 at 190°C under a load of 2.16 kgf is 0.1 to 4.0 g/10 min, preferably 0.3 to 2.5 g/10 min, and more preferably 0.5 to 2.0 g/10 min.

Within the above range of the MFR of the copolymer (B1), the present composition can be injection molded easily, and a molded body having an excellent balance between dimensional stability and impact strength can be easily obtained.

The density of copolymer (B1) in accordance with the JIS K 7112 B method (pycnometer method) is preferably 900 to 920 kg/cm$^3$ and more preferably 910 to 920 kg/cm$^3$.

Within the above range of the density of copolymer (B1), the present composition can be injection molded easily, and a molded body having an excellent balance between dimensional stability and impact strength can be easily obtained.

<Propylene homopolymer (B2)>

The melt flow rate (MFR) of polymer (B2) measured in accordance with JIS K7210 at 190°C under a load of 2.16 kgf is 0.1 to 4.0 g/10 min, preferably 0.3 to 2.5 g/10 min, and more preferably 0.5 to 2.0 g/10 min.

Within the above range of the MFR of polymer (B2), the present composition can be injection molded easily, and a molded body having an excellent balance between dimensional stability and impact strength can be easily obtained.

The density of polymer (B2) measured in accordance with the JIS K 7112 B method (pycnometer method) is preferably 900 to 920 kg/cm$^3$ and more preferably 910 to 920 kg/cm$^3$.

Within the above range of the density of polymer (B2), the present composition can be injection molded easily, and a molded body having an excellent balance between dimensional stability and impact strength can be easily obtained.

The copolymer (B1) and the polymer (B2) may be commercially available products or may be appropriately produced by known methods.

Monomers constituting the copolymer (B1) and/or the polymer (B2) (for example, propylene, an α-olefin other than propylene) may be solely monomers obtained from biomass-derived raw materials, solely monomers obtained from fossil fuel-derived raw materials, or mixtures of monomers obtained from biomass-derived raw materials of raw materials and monomers obtained from fossil fuel-derived raw materials.

The present composition may contain a propylene-based polymer (B3) in addition to the copolymer (B1) and the polymer (B2) to the extent that the effect of the present invention is not impaired. An example thereof includes a propylene-based block copolymer (for example, a block copolymer of propylene and 30 mol% or less of other α-olefin).

Examples of commercially available products of the propylene-based resin (B) include Prime Polypro (registered trademark) manufactured by Prime Polymer Co., Ltd., NOVATEC (registered trademark) manufactured by Japan Polypropylene Corporation, and NOBLEN (registered trademark) manufactured by SUMITOMO CHEMICAL COMPANY, LIMITED.

[Ethylenic resin (C)]

The present composition contains high-density polyethylene (C1) and ultra-high molecular weight polyethylene (C2) as the ethylenic resins (C). The high-density polyethylene (C1) is a component for achieving both adhesiveness and sliding properties, and the ultra-high molecular weight polyethylene (C2) is a component for achieving both extrusion moldability and sliding properties.

The present composition may contain solely one type each of the high-density polyethylene (C1) and the ultra-high molecular weight polyethylene (C2), or may contain two or more types thereof.

<High-density polyethylene (C1)>

Examples of the high-density polyethylenes (C1) include an ethylene homopolymer and an ethylene·α-olefin copolymer.

Specific examples of the α-olefins in the ethylene·α-olefin copolymer include α-olefins having 3 to 12 carbon atoms, such as propylene, 1-butene, 1-hexene, 4-methyl-1-pentene, and 1-octene.

The α-olefin may be used alone or two or more thereof may be used.

When the high-density polyethylene (C1) is the ethylene·α-olefin copolymer, the content of constituent units derived from ethylene is preferably 50 to 99 mol%, more preferably 55 to 99 mol%, and still more preferably 55 to 98 mol%, and the content of constituent units derived from the α-olefin is preferably 1 to 50 mol%, more preferably 1 to 45 mol%, and still more preferably 2 to 45 mol%.

Herein, a sum of the content of constituent units derived from ethylene and the content of constituent units derived from the α-olefin is 100 mol%.

The density of the high-density polyethylene (C1) measured in accordance with the JIS K7112 B method (pycnometer method) is 940 to 970 $kg/cm^3$ and preferably 945 to 965 $kg/cm^3$.

Within the above range of the density of the high-density polyethylene (C1), a molded body with excellent adhesiveness can be easily obtained.

The melting point of the high-density polyethylene (C1) measured by differential scanning calorimetry (DSC) is preferably 110 to 150°C, more preferably 115 to 150°C, and still more preferably 120 to 140°C, from the viewpoint of adhesiveness. The melting point described herein is a crystal melting peak temperature (Tm) determined from a thermogram measured using a differential scanning calorimeter, when approximately 10 mg of a sample was raised from a temperature of -40°C to 200°C at a rate of heating of 10°C/min, held at 200°C for 1 minute, decreased to a temperature of -40°C at a rate of cooling of 10°C/min, and then raised again to 200°C at a rate of heating of 10°C/min.

The MFR of the high-density polyethylene (C1) measured in accordance with JIS K 7210 at 190°C under a load of 2.16 kgf is 0.1 g/10 min or less, preferably 0.01 to 0.1 g/10 min, and more preferably 0.01 to 0.50 g/10 min, from the viewpoint of improvement in sliding properties, for example.

Examples of polymerization catalysts used in production of the high-density polyethylene (C1) include multi-site catalysts such as known Ziegler-based and Phillips-based catalysts, Kaminsky catalysts such as zirconocene, titanocene, and hafnocene (collectively referred to as a metallocene), and a highly active single-site catalyst such as a postmetallocene catalyst. The high-density polyethylene (C1) can be produced by known polymerization methods using the polymerization catalysts.

<Ultra-high molecular weight polyethylene (C2)>

Examples of the ultra-high molecular weight polyethylene (C2) include an ethylene homopolymer and an

ethylene·α-olefin copolymer.

Specific examples of the α-olefin in the ethylene-a-olefin copolymer include α-olefins having 3 to 12 carbon atoms, such as propylene, 1-butene, 1-hexene, 4-methyl-1-pentene, and 1-octene.

The α-olefin may be used alone or two or more thereof may be used.

When the ultra-high molecular weight polyethylene (C2) is the ethylene·α-olefin copolymer, the content of constituent units derived from ethylene is preferably 50 to 99 mol%, more preferably 55 to 99 mol%, and still more preferably 55 to 98 mol%, and the content of constituent units derived from the α-olefin is preferably 1 to 50 mol%, more preferably 1 to 45 mol%, and still more preferably 2 to 45 mol%.

Herein, a sum of the content of constituent units derived from ethylene and the content of constituent units derived from the α-olefin is 100 mol%.

The ultra-high molecular weight polyethylene (C2) has an intrinsic viscosity [η] measured in decalin at 135°C of 10 to 40 dl/g, preferably 15 to 35 dl/g, and more preferably 20 to 35 dl/g, from the viewpoint of improvement in sliding properties, for example.

The intrinsic viscosity [η] is measured by the method described in Examples described later.

The ultra-high molecular weight polyethylene (C2) has an average particle size $D_{50}$ of 22 to 50 μm, more preferably 22 to 40 μm, and still more preferably 22 to 30 μm.

The average particle size is measured by the method described in Examples described later. Within the above range of the average particle size of the ultra-high molecular weight polyethylene (C2), a molded body having excellent extrusion moldability can be easily obtained.

The average particle diameter [η] is measured by the method described in Examples described later.

The density of the ultra-high molecular weight polyethylene (C2) measured in accordance with the JIS K7112 B method (pycnometer method), is less than 940 kg/cm$^3$, preferably 850 to 930 kg/cm$^3$, and more preferably 850 to 920 kg/cm$^3$.

When the density of the ultra-high molecular weight polyethylene (C2) is within the above range, a molded body with excellent extrusion moldability can be easily obtained.

As a method for producing the ultra-high molecular weight polyethylene (C2), a known polymerization method using an olefin polymerization catalyst is employed. For example, the ultra-high molecular weight polyethylene (C2) is preferably produced by a solution polymerization method, a slurry polymerization method, a high-pressure ion polymerization method, or a gas phase polymerization method, using a Ziegler-Natta catalyst, a complex-based catalyst such as a metallocene complex or a non-metallocene complex, or a bulk polymerization method or a solution polymerization method, using a radical initiator. Among them, it is particularly preferable to employ a method for polymerizing a monomer using a Ziegler-Natta catalyst or a complex-based catalyst, or a method for polymerizing a monomer in the presence of a metallocene catalyst.

Monomers constituting the high-density polyethylene (C1) and/or the ultra-high molecular weight polyethylene (C2) (for example, ethylene and an α-olefin other than ethylene) may be solely monomers obtained from biomass-derived raw materials, solely monomers obtained from fossil fuel-derived raw materials, or mixtures of monomers obtained from biomass-derived raw materials of raw materials and monomers derived from fossil fuel-derived raw materials.

The present composition may contain an ethylenic polymer (C3) in addition to the high-density polyethylene (C1) and the ultra-high molecular weight polyethylene (C2) to the extent that the effect of the present invention is not impaired.

Examples of commercially available ethylenic resins (C) include HI-ZEX (registered trademark) manufactured by Prime Polymer Co., Ltd., MIPELON (registered trademark) manufactured by Mitsui Chemicals Inc., Millerson (registered trademark) manufactured by Prime Polymer Co., Ltd., Evolue (registered trademark) manufactured by Prime Polymer Co., Ltd., and SUNTECH (registered trademark) manufactured by Asahi Kasei Corporation.

[Silicone compound (D)]

The present composition contains a silicone compound (D). The silicone compound (D) is a component added mainly to reduce sliding resistance.

The present composition may contain one type of silicone compound (D) alone or two or more types thereof.

The kinematic viscosity of the silicone compound (D) at 25°C is 3,000 to 1,000,000 cSt, preferably 3,000 to 500,000 cSt, and more preferably 3,000 to 200,000 cSt, from the viewpoint of reduction of sliding resistance. In the case of using plural types of silicone compounds (D), the kinematic viscosity at 25°C of each compound may stay within the above range.

The kinematic viscosity is measured by the method described in Examples described later.

Examples of the silicone compound (D) include a silicone oil, high-molecular weight silicone (silicone gum), and silicone powder, and a silicone oil (D-1), preferably a silicone oil having a kinematic viscosity of less than 5000 mm$^2$/s, is preferably combined for use with silicone gum (D-2).

When the silicone oil (D-1) and the silicone gum (D-2) are used in combination thereof, a mass ratio [(D-1)/(D-2)]

is preferably 90/10 to 10/90 and more preferably 75/25 to 25/75.

Examples of the silicone oils include, for example, a dimethyl silicone oil, a phenylmethyl silicone oil, an alkyl silicone oil, a fluorosilicone oil, tetramethyltetraphenyltrisiloxane, and a modified silicone oil.

The silicone gum has a weight-average molecular weight of preferably 100,000 or more, more preferably 100,000 to 800,000, and still more preferably 450,000 to 650,000. Also, the silicone gum is preferably non-cross-linked gum. The weight-average molecular weight can be measured, for example, by GPC (gel permeation chromatography).

The silicone gum may be a commercially available product, or a commercially available silicone master batch preliminarily mixed with a resin component such as polypropylene. Examples of the commercially available products include, for example, MB50-001 and BY27-001 manufactured by Dow Corning Toray Silicone Co., Ltd., CF-9150 manufactured by Dow Corning Toray Silicone Co., Ltd., and X-21-3043 and X-22-2101 manufactured by Shin-Etsu Chemical Co., Ltd.

It is to be noted that the silicone gum in the master batch can be measured by GPC by preliminarily subjecting the master batch to the following treatment to separate the silicone gum and polypropylene, and then measuring the silicone gum obtained.

(Separation treatment of silicone gum and polypropylene)

First, 0.05 g of a sample (master batch) was weighed, and added with 10 mL of xylene with 0.1 g/L BHT (dibutylhydroxytoluene), and then stirred at 125°C for 60 minutes to dissolve the master batch. After confirming visually that the master batch was completely dissolved, the solution is left to stand at room temperature for approximately 3 hours to precipitate crystalline polypropylene in the liquid. The solution from which this crystal had been precipitated underwent suction filtration using a Fluoropore FP-100 (1 μm) manufactured by Sumitomo Electric Industries, Ltd. and cleaned with 3 mL of xylene to be separated into CXS (xylene soluble portion, silicone gum) and CXIS (xylene insoluble portion, polypropylene). The CXS was preliminarily dried by blowing nitrogen at room temperature, and is then vacuum dried at 60°C. The vacuum drying continues until no weight loss is observed. The CXS portion after vacuum drying is used for GPC measurement.

[Other components]

The present composition may contain other components in addition to the above-described (A) to (D), if necessary, to the extent that the effect of the present invention is not impaired.

Examples of the other components include other resins and elastomers other than the above-described (A) to (C), a softener (E), a heat stabilizer, an antistatic agent, a weather stabilizer, an antioxidant, an ultraviolet absorber, a light stabilizer, a filler, a flame retardant, a coloring agent, and a lubricant.

Each of these other components may be used alone or in combination of two or more thereof.

<Softener (E)>

As the softener (E), a softener (plasticizer) normally used for rubber may be used. The softener (E) may be a softener obtained from a raw material derived from a fossil fuel, or may be a softener obtained from an animal or plant-based raw material.

Specific examples of the softener (E) include petroleum-based plasticizers such as a process oil, a lubricating oil, a paraffin oil, liquid paraffin, petroleum asphalt, and vaseline; coal tar-based plasticizers such as coal tar and a coal tar pitch; fatty oil-based plasticizers such as a castor oil, a linseed oil, a rapeseed oil, a soybean oil, and a coconut oil; a tall oil; sab (factice); waxes such as beeswax, こ carnauba wax, and lanolin; fatty acids and fatty acid salts such as ricinoleic acid, palmitic acid, stearic acid, barium stearate, calcium stearate, and zinc laurate; naphthenic acid; pine oil, rosin, or derivatives thereof; synthetic polymeric substances such as a terpene resin, a petroleum resin, and a coumarone-indene resin; ester-based plasticizers such as dioctyl phthalate, dioctyl adipate, and dioctyl sebacate; microcrystalline wax, liquid polybutadiene, modified liquid polybutadiene, liquid thiokol, and hydrocarbon-based synthetic lubricating oil. Among these, petroleum-based plasticizers, particularly process oils, such as a paraffin-based process oil and a naphthene-based process oil, are preferably used.

When the softener (E) is compounded in the present composition, the amount compounded (content) is preferably 0.1 to 10.0% by mass and more preferably 1.0 to 9.8% by mass, relative to 100.0% by mass of the present composition, from the viewpoints of inhibition of bleeding and coating adhesiveness. However, the total content of the components (A), (B1), (B2), (C1), (C2), (D) and (E) is 100.0% by mass or less.

When the oil-extended rubber is used as the raw material of the present composition, the petroleum-based plasticizer used for oil-extended is contained in the softener (E).

<<Method for producing the present composition>>

The present composition can be produced by employing a method for melt-kneading the ethylene·$\alpha$-olefin-non·conjugated polyene copolymer (A), the propylene random copolymer (B1), the propylene homopolymer (B2), the high-density polyethylene (C1), the ultra-high molecular weight polyethylene (C2), the silicone compound (D), and the other component, if necessary, followed by granulation or pulverization thereof.

The present composition is characterized in that the copolymer (A) is at least partially cross-linked with a phenolic resin-based cross-linking agent. That is, the method for producing the present composition has the step of cross-linking the copolymer (A) at least partially with a phenolic resin-based cross-linking agent. The step is not particularly limited as long as it is a conventionally known cross-linking method using a phenolic resin-based cross-linking agent, but is preferably as follows in terms of sliding properties, low-temperature properties, and flexibility.

The step is a method for dynamically heat treating a mixture containing the copolymer (A), the phenolic resin-based cross-linking agent, preferably a portion of the propylene-based resin (B), and the other component, if necessary to fabricate a thermoplastic elastomer in which at least a portion of the copolymer (A) is partially or totally cross-linked with the phenolic resin-based cross-linking agent (hereinafter also simply referred to as a "thermoplastic elastomer"), and then melt-kneading the remaining propylene-based resin (B), high-density polyethylene (C1), ultra-high molecular weight polyethylene (C2), silicone compound (D), and other component, if necessary, followed by granulation or pulverization thereof.

The kneading can be performed using a kneading apparatus, which may be, for example, a mixing roll, an intensive mixer (for example, a Banbury mixer or kneader), and a single-screw or twin-screw extruder, but is preferably a non-open type apparatus.

The granulation or pulverization may be performed by a conventionally known method.

[Thermoplastic elastomer]

As a raw material for the present composition, the thermoplastic elastomer preliminarily fabricated as described above, in which at least a portion of the ethylene/$\alpha$-olefin/nonconjugated polyene copolymer (A) was partially or totally cross-linked with the phenol resin-based cross-linking agent, may be used. The thermoplastic elastomer may contain the propylene-based resin (B).

Examples of such thermoplastic elastomers include the following (1) or (2):

(1) a partially or completely cross-linked thermoplastic elastomer obtained by having dynamically heat treated a mixture containing (a) cross-linked olefinic copolymer rubber (uncrosslinked rubber) (for example, the copolymer (A)) (hereinafter also referred to as a "component (a)"), (b) crystalline polypropylene (for example, the propylene-based resin (B)) (hereinafter also referred to as a "component (b)"), and (c) a petroleum-based plasticizer (hereinafter also referred to as a "component (c)"), if necessary, in the presence of a phenolic resin-based cross-linking agent; or
(2) a partially or completely cross-linked thermoplastic elastomer in which a cross-linked rubber composition obtained by having dynamically heat treated a mixture containing the component (a), a portion of the component (b), and the component (c), if necessary, in the presence of the phenolic resin-based cross-linking agent, was homogeneously compounded with (d) the remaining component (b).

The petroleum-based plasticizer (c) is usually a high-boiling petroleum fraction that is used for the purpose of weakening intermolecular force of rubber when roll processed to facilitate the processing, and for the purpose of aiding dispersion of, for example, carbon black and white carbon, which are optionally contained, or in order to reduce hardness of vulcanized rubber and increase its flexibility and elasticity. The component (c) may be the same plasticizer as the petroleum-based plasticizer in the section [Other components].

In the thermoplastic elastomer, a mass compounding ratio [(b)/(a)] of the component (b) to the component (a) is usually 90/10 to 10/90 and preferably 70/30 to 15/85.

The component (a) may be used in combination of the copolymer (A) and other uncrosslinked rubber. In this case, the other uncrosslinked rubber is preferably used in an amount of 40 parts by mass or less and more preferably 5 to 20 parts by mass, relative to 100 parts by mass of the total amount of component (b) and component (a).

Examples of the other uncrosslinked rubber include diene-based rubbers such as styrene-butadiene rubber (SBR), nitrile rubber (NBR), natural rubber (NR), and butyl rubber (IIR), SEBS, and polyisobutylene.

The thermoplastic elastomer is preferably a thermoplastic elastomer containing the propylene-based resin (B) as crystalline polypropylene and the ethylene/$\alpha$-olefin/nonconjugated polyene copolymer (A) as uncrosslinked rubber, which are present in a state of being partially cross-linked in the thermoplastic elastomer, with a mass compounding ratio of the crystalline polypropylene to the uncrosslinked rubber (crystalline polypropylene/uncrosslinked rubber) within the range of 70/30 to 10/90.

A more specific example of the thermoplastic elastomer includes a thermoplastic elastomer in which the uncrosslinked rubber (a-1) is partially cross-linked, obtained by having dynamically heat treated a mixture containing 30 to 90 parts by mass of at least one uncrosslinked rubber (a-1) selected from ethylene/propylene/nonconjugated polyene copolymers and 70 to 10 parts by mass of at least one crystalline polypropylene (b-1) selected from propylene-based random copolymers (B1) (provided that the total amount of components (a-1) and (b-1) is 100 parts by mass), and 5 to 150 parts by mass of the petroleum-based plasticizer (c) in the presence of a phenolic resin-based cross-linking agent.

The phenolic resin-based cross-linking agent is a thermally cross-linkable resin, and is also called a phenolic resin-based curable resin or a phenolic resin. An example of the phenolic resin-based cross-linking agent includes a halogenated phenolic resin-based cross-linking agent.

Use of the phenolic resin-based cross-linking agent enables providing a sliding composition excellent in heat deterioration resistance.

A suitable example of the phenolic resin-based cross-linking agent includes a resol resin and an example thereof includes a cross-linking agent produced by condensing an alkyl-substituted phenol or unsubstituted phenol with an aldehyde in an alkaline medium, preferably formaldehyde, or a cross-linking agent produced by condensing a bifunctional phenol dialcohol.

The alkyl-substituted phenol is preferably substituted with an alkyl group having approximately 1 to 10 carbon atoms, and more preferably dimethylol phenols or a phenolic resin, each of which is substituted at the para position with an alkyl group having approximately 1 to 10 carbon atoms.

An example of the phenolic resin-based cross-linking agent includes a compound represented by the following formula (I) or a compound in which the terminal hydroxyl group ($-CH_2-OH$) of the compound represented by the following formula (I) has been substituted with a halogen atom.

[Chem. 1]

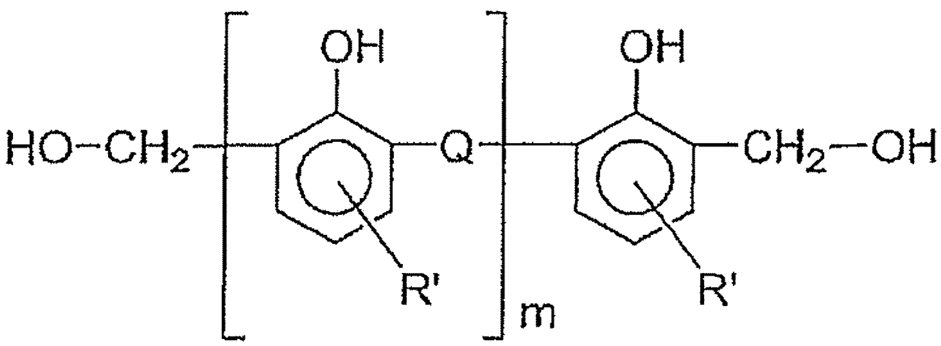

・・・ (I)

wherein Q is $-CH_2-$ or $-CH_2-O-CH_2-$, m is an integer of 0 to 20, and R' is an organic group.

Preferably, Q is $-CH_2-O-CH_2-$, m is an integer of 0 to 10, and R' is an organic group having less than 20 carbon atoms. More preferably, m is an integer of 0 to 5, and R' is an organic group having 4 to 12 carbon atoms.

Specific examples of the compounds represented by formula (I) or the compounds in which the terminal hydroxyl group ($-CH_2-OH$) of the compound represented by formula (I) has been substituted with a halogen atom include, for example, an alkylphenol formaldehyde resin, a methylolated alkylphenol resin, and a halogenated alkylphenol resin, and are preferably halogenated alkylphenol resins, and more preferably bromides in which the terminal hydroxyl group ($-CH_2-OH$) of the compound represented by formula (I) has been substituted with a bromine atom. An example of the bromide is shown in formula (II) below.

[Chem. 2]

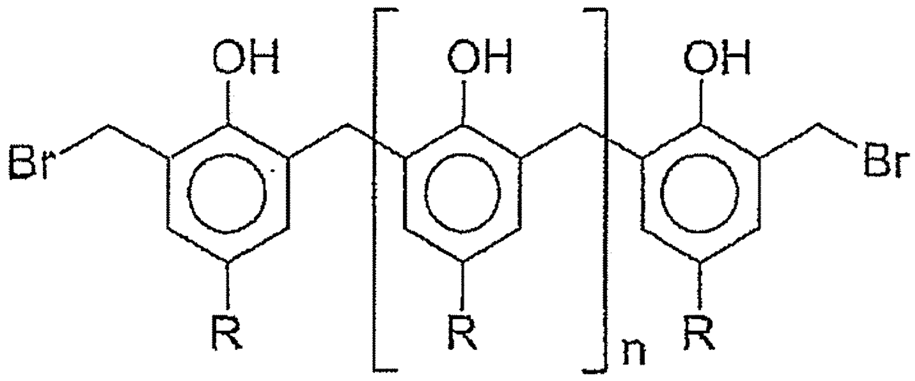

・・・ (I I)

wherein, n is an integer of 0 to 10, and R is a saturated hydrocarbon group having 1 to 15 carbon atoms.

Examples of the phenolic resin-based cross-linking agents include TACKIROL 201 (alkylphenol formaldehyde resin, manufactured by Taoka Chemical Co., Ltd.), TACKIROL 250-I (brominated alkylphenol formaldehyde resin with a bromination conversion rate of 4%, manufactured by Taoka Chemical Co., Ltd.), TACKIROL 250-III (brominated alkylphenol formaldehyde, manufactured by Taoka Chemical Co., Ltd.), PR-4507 (manufactured by Gun Ei Chemical Industry Co., Ltd.), Vulkaresat 510E (manufactured by Hoechst GmbH), Vulkaresat 532E (manufactured by Hoechst GmbH), Vulkaresen E (manufactured by Hoechst GmbH), Vulkaresen 105E (manufactured by Hoechst GmbH), Vulkaresen 130E (manufactured by Hoechst GmbH), Vulkaresol 315E (manufactured by Hoechst GmbH), Amberol ST 137X (manufactured by Rohm & Haas Company), SUMILITERESIN PR-22193 (manufactured by Sumitomo Bakelite Co., Ltd.), Symphorm-C-100 (manufactured by Anchor Chemicals Industries), Symphorm-C-1001 (manufactured by Anchor Chemicals Industries), Tamanol 531 (manufactured by ARAKAWA CHEMICAL INDUSTRIES, LTD.), Schenectady SP1059 (manufactured by Schenectady Chemicals, Inc.), Schenectady SP1045 (manufactured by Schenectady Chemicals, Inc.), CRR-0803 (manufactured by U.C.C.), Schenectady SP1055 (brominated alkylphenol formaldehyde resin, manufactured by Schenectady Chemicals, Inc.), Schenectady SP1056 (manufactured by Schenectady Chemicals, Inc.), CRM-0803 (manufactured by Showa Highpolymer Co., Ltd.), and Vulkadur A (manufactured by Bayer AG). Among these, preferred is the halogenated phenol resin-based cross-linking agent, and more preferred are brominated alkylphenol formaldehyde resins such as TACKIROL 250-I and 250-III, Schenectady SP1055, and SP1056.

As specific examples of cross-linking using the phenolic resin-based cross-linking agents, the techniques described in, for example, US Pat. No. 4,311,628, US Pat. No. 2,972,600, and US Pat. No. 3,287,440, can also be employed.

The US Pat. No. 4,311,628 specification discloses a phenolic curative system consisting of a phenolic curing resin and a cure activator. The basic component of the system is a phenolic resin-based cross-linking agent produced by condensation of a substituted phenol (for example, a halogen-substituted phenol or a C1-C2 alkyl-substituted phenol) or an unsubstituted phenol with an aldehyde, preferably formaldehyde, in an alkaline medium, or by condensation of difunctional phenol dialcohols (preferably dimethylolphenols substituted at the para position with a C5-C10 alkyl group). A halogenated alkyl-substituted phenolic resin-based cross-linking agent produced by halogenation of the alkyl-substituted phenolic resin cross-linking agent is particularly suitable. Particularly recommended is a phenolic resin-based cross-linking agent consisting of a methylolphenol curing resin, a halogen donor and a metal compound, the details of which are described in US Pat. No. 3,287,440 specification and US Pat. No. 3,709,840 specification. The non-halogenated phenolic resin-based cross-linking agent is used simultaneously with a halogen donor and preferably with a hydrogen halide scavenger. Normally, the halogenated phenolic resin-based cross-linking agent, preferably a brominated phenolic resin-based cross-linking agent containing 2 to 10% by mass of bromine, does not require a halogen donor, and is used simultaneously with a hydrogen halide scavenger such as a metal oxide which is selected from iron oxide, titanium oxide, magnesium oxide, magnesium silicate, silicon dioxide, and zinc oxide and is preferably zinc oxide, for example. These hydrogen halide scavengers such as zinc oxide are usually used in an amount of 1 to 20 parts by mass relative to 100 parts by mass of the phenolic resin-based cross-linking agent. The presence of such a scavenger promotes cross-linking action of the phenolic resin-based cross-linking agent, but in the case of rubber that is not easily cross-linked with the phenolic resin-based cross-linking agent, it is desirable to use both a halogen donor and zinc oxide. The method for producing the halogenated phenolic curing resin and their use in a cross-linking system using zinc oxide are described in US Pat. No. 2,972,600 specification and US Pat. No. 3,093,613 specification, the disclosures of which are to be incorporated herein by reference together with the disclosures of each of US Pat. No. 3,287,440 specification and US Pat. No. 3,709,840 specification. Examples of the suitable halogen donors include stannous chloride, ferric chloride, chlorinated paraffin, and

halogen-donating polymers such as a chlorinated polyethylene, chlorosulfonated polyethylene, and polychlorobutadiene (neoprene rubber). For more details on phenolic vulcanizing agent systems, see "Vulcanization and Vulcanizing Agents" by W. Hoffman, Palmerton Publishing Company. The suitable phenolic resin-based cross-linking agent is commercially available, and for example, such cross-linking agents can be purchased from Schenectady Chemicals, Inc. under the trade names "SP1045," "CRJ352," "SP1055," and "SP1056."

The phenolic resin-based cross-linking agent is used in an amount of preferably 0.1 to 20 parts by mass and more preferably 1 to 10 parts by mass, relative to 100 parts by mass of the component (a). The phenolic resin-based cross-linking agent may also be used in the form of a cross-linking agent master batch preliminarily mixed with a hydrogen halide scavenger such as zinc oxide.

Setting the amount of the phenolic resin-based cross-linking agent compounded within the above range facilitates providing a composition excellent in formability, and the obtained thermoplastic elastomer molded body has high strength, excellent oil resistance, sufficient heat resistance and mechanical properties.

Upon dynamic cross-linking with the phenol resin-based cross-linking agent, cross-linking auxiliary agents such as sulfur, p-quinone dioxime, p,p'-dibenzoylquinone dioxime, N-methyl-N,4-dinitrosoaniline, nitrosobenzene, diphenyl guanidine, and trimethylolpropane-N,N'-m-phenylenedimaleimide; and auxiliary agents such as divinylbenzene, triallyl cyanurate, polyfunctional methacrylate monomers such as ethylene glycol dimethacrylate, diethylene glycol dimethacrylate, polyethylene glycol dimethacrylate, trimethylolpropane trimethacrylate, and allyl methacrylate; and polyfunctional vinyl monomers such as vinyl butyrate and vinyl stearate, may be used.

By using the auxiliary agents, a uniform and mild cross-linking reaction can be expected.

As the auxiliary agent, divinylbenzene is preferable. Divinylbenzene is easy to handle, has favorable compatibility with the uncrosslinked rubber (a-1) and the crystalline polyolefin (b-1), and has the effect of solubilizing the phenolic resin-based cross-linking agent and also serves as a dispersant for the phenolic resin-based cross-linking agent, so that a uniform cross-linking effect results from heat treatment, making it possible to easily provide a thermoplastic elastomer with a favorable balance between flowability and physical properties.

The cross-linking auxiliary agent or auxiliary agent is preferably used in an amount of 2 parts by mass or less and more preferably 0.3 to 1 part by mass, relative to 100 parts by mass of the component (a).

Also, upon dynamic cross-linking with the phenolic resin-based cross-linking agent, a dispersion accelerator may be used in order to promote decomposition of the phenolic resin-based cross-linking agent.

Examples of the decomposition promoters include, for example, tertiary amines such as triethylamine, tributylamine, and 2,4,6-tri(dimethylamino)phenol; and naphthenates of naphthenic acid and various metals such as aluminum, cobalt, vanadium, copper, calcium, zirconium, manganese, magnesium, lead, and mercury (for example, Pb, Co, Mn, Ca, Cu, Ni, Fe, Zn, and rare earth elements).

The amount of the dispersion accelerator used is preferably 0.01 to 5 parts by mass and more preferably 0.05 to 3 parts by mass, relative to 100 parts by mass of the total of the components (a) and (b).

Within the above range of the amount of the dispersion accelerator used, a cross-linking reaction does not proceed too quickly, and the dispersion accelerator is unlikely to remain unreacted in the resulting thermoplastic elastomer, so that a thermoplastic elastomer that is excellent in flowability and unlikely to change in physical properties due to thermal history upon mold processing, can be easily obtained.

The term "dynamically heat treat" refers to kneading each of the components in a molten state.

The kneading can be performed using a kneading apparatus, and as the kneading apparatus, a conventionally known kneading apparatus such as an open-type mixing roll or a non-open-type Banbury mixer, extruder, kneader, or continuous mixer, can be used. Among these, a non-open-type kneading apparatus is preferred.

The kneading is preferably performed under an atmosphere of inert gas such as nitrogen gas or carbon dioxide gas.

A kneading temperature is usually 150 to 280°C and preferably 170 to 250°C, and a kneading time is usually 0.5 to 20 minutes and preferably 1 to 10 minutes.

The kneading is also preferably performed while applying shear force, and the applied shear force is desirably set to a shear rate in a range of 10 to 50,000 $sec^{-1}$ and preferably 100 to 20,000 $sec^{-1}$.

The Shore D hardness (after 5 seconds) of the thermoplastic elastomer as measured in accordance with ISO 7619 is preferably 1 to 98, more preferably 1 to 60, still more preferably 10 to 50, and particularly preferably 30 to 50, in terms of, for example, resulting in a molded body excellent in rigidity.

The MFR of the thermoplastic elastomer measured in accordance with ASTM D1238 at 230°C under a load of 10 kgf is usually 0.1 to 100 g/10 min and preferably 1 to 100 g/10 min. When the MFR is the lower limit or higher, the flowability is improved, facilitating molding in an extruder, and the MFR of the upper limit or less enables inhibition of, for example, drawdown when the elastomer is discharged from a nozzle of an extruder, so that the extrusion moldability is improved.

<<Molded body>>

The molded body according to one embodiment of the present invention (hereinafter also referred to as "the present molded body") is a molded body obtained by molding the present composition.

The present molded body can be produced by molding the present composition by various known forming methods, specifically, various molding methods such as extrusion molding, press molding, injection molding, calendering, and blow molding building.

The present molded body may also be a molded body obtained by subjecting a molded body such as a sheet obtained by the above molding methods to secondary processing such as thermomolding.

From the viewpoint of the present molded body exhibiting excellent formability, the MFR of the present composition measured in accordance with ASTM D1238 at 230°C under a load of 10 kgf is preferably 0.1 to 100 g/10 min and more preferably 1 to 100 g/10 min. When the MFR is the lower limit or higher, the flowability is improved, facilitating molding in an extruder, and the MFR of the upper limit or less enables inhibition of, for example, drawdown when the elastomer is discharged from a nozzle of an extruder, so that the extrusion moldability is improved.

The present molded body preferably has a swell value of 1.00 to 1.50 and more preferably 1.03 to 1.10. Within the above range of the swell value, die drool is inhibited from adhering to a nozzle, and processability may be improved.

In terms of the present molded body resulting in a molded body with excellent rigidity, the present composition has a Shore D hardness (after 5 seconds) measured in accordance with ISO 7619 of preferably 30 to 60, more preferably 34 to 58, still more preferably 38 to 56, and particularly preferably 42 to 54.

Applications for use of the present molded body are not particularly limited, but suitable examples thereof include various well-known applications such as automobile parts, civil engineering and building materials, electrical and electronic components, hygiene products, and films and sheets.

<Automobile parts>

Examples of the automobile parts include automobile interior parts and automobile exterior parts, and specifically include weather strip materials, bumper moldings, side moldings, air spoilers, deflectors, mudguards, air duct hoses, wire harness grommets, rack and pinion boots, suspension cover boots, glass guides, inner belt line seals, corner moldings, glass encapsulations, hood seals, glass run channels, secondary seals, various packings, hoses, and airbag covers.

Among these, since the present molded body is excellent in balance between adhesiveness and sliding properties and also excellent in low-temperature impact strength, it is particularly suitable for use in automobile parts having corners, such as a glass run channel.

<Civil engineering and building materials>

Examples of the civil engineering and building materials include ground improvement sheets, water supply boards, civil engineering materials and building materials used for noise prevention, for example, various gaskets and sheets for civil engineering and construction, waterproofing materials, joint materials, and window frames for construction.

<Electrical·electronic components>

Examples of the electrical/electronic components include electrical·electronic components such as wire coverings, connectors, caps, and plugs.

<Hygiene products>

The hygiene products include hygiene products such as sanitary products, disposable diapers, and toothbrush grips.

<Film sheets>

The film sheets include infusion bags, medical containers, automobile interior/exterior materials, beverage bottles, clothing cases, food packaging materials, food containers, retort containers, pipes, transparent substrates, and sealants.

The present molded body can also be used for other applications in addition to the above-described applications.

Examples of the other applications include footwear such as shoe soles and sandals; leisure goods such as swimming fins, underwater goggles, golf club grips, and baseball bat grips; gaskets; waterproof cloths; belts; garden hoses; anti-slip tapes for stairs; and anti-slip tapes for logistics pallets.

## Examples

The embodiments of the present invention will be described in more detail with reference to Examples, but the present invention is not limited to these Examples.

<Measurement or evaluation method>

It is to be noted that the physical properties were measured or evaluated by the following methods.

[Two-layer sheet molding method]

Various two-layer sheets used in the evaluation of the sliding composition were fabricated under the following conditions, with the type of substrate and thickness of the sheet being appropriately changed. For a sliding layer, pellets of the sliding composition obtained as follows were used. The substrate layer was extrusion molded using a 50 mm single-screw extruder (manufactured by The Japan Steel Works, Ltd.) under the temperature conditions [C1/C2/C3/C4/C5 = 160/170/180/190/200°C]. The sliding layer was extrusion molded using a 30 mm single-screw extruder (PLABOR Research Laboratory of Plastics Technology Co., Ltd.) under the temperature conditions [C1/C2/C3 = 200/210/230°C].

[Weight-average molecular weight]

The weight-average molecular weight of the (co)polymer and silicone compound was measured by GPC under the following conditions.

(Measurement conditions)

Instrument: HLC-8120 manufactured by Tosoh Corporation
Column: PL 10u Mixed B manufactured by Polymer Laboratories Ltd. (7.5 mm I.D × 30 cm × 2)
Detector: Differential refractive index detector (RI/built-in)
Solvent: Toluene (special grade)
Temperature: 40°C
Flow rate: 1.0 mL/min
Injection amount: 110 μL
Concentration: 0.1% by mass
Calibration sample: Monodisperse polystyrene
Calibration method: Conversion in terms of polystyrene

[Intrinsic viscosity [η] measured in decalin at 135°C]

The intrinsic viscosity [η] (dl/g) of the (co)polymer was measured in decalin at a temperature of 135°C.

Specifically, approximately 15 mg of the sample was dissolved in 50 ml of decalin, and a specific viscosity $\eta_{sp}$ was measured in a 135°C oil bath. This decalin solution was diluted with an additional 5 ml of decalin, and the specific viscosity $\eta_{sp}$ was then measured in the same manner. This dilution procedure was repeated twice, and the value of $\eta_{sp}/C$ when the concentration (C) was extrapolated to 0 was calculated as the intrinsic viscosity [η], as shown in the following formula.

$$[\eta] = \lim (\eta_{sp}/C) \quad (C \rightarrow 0)$$

[Average particle size $D_{50}$]

The average particle size $D_{50}$ of ultra-high molecular weight polyethylene was calculated from a weight-based particle size distribution by a Coulter Counter method using a Multisizer 3, manufactured by Beckman Coulter, Inc.

[Melting point (Tm)]

The melting point (Tm) of the (co)polymer was measured by differential scanning calorimetry using the following method.

Approximately 5 mg of the sample was packed in a dedicated aluminum pan, and using a Diamond DSC manufactured by PerkinElmer Japan G.K., the sample was raised from a temperature of 30°C to 230°C at 320°C/min, held at 230°C for 10 minutes, then decreased from a temperature of 230°C to 30°C at 10°C/min, held at 30°C for another minute to obtain the melting point from an endothermic curve when raised at 10°C/min. It is to be noted that when a plurality of peaks are detected upon DSC measurement, the peak temperature detected on the highest temperature side is defined as the melting point (Tm).

[Ethylene content]

The ethylene content of the copolymer was calculated based on analysis of the spectrum obtained by $^{13}C$-NMR measurement under the following conditions.

Apparatus: AVANCEIII cryo-500 nuclear magnetic resonance apparatus, manufactured by Bruker BioSpin K.K.
Measurement nucleus: 13C (125 MHz)
Measurement mode: Single pulse proton broadband decoupling
Pulse width: 45° (5.00 μseconds)
Number of points: 64 k
Measurement range: 250 ppm (-55 to 195 ppm)
Repetition time: 5.5 seconds
Number of accumulations: 128
Measurement solvent: orthodichlorobenzene/benzene-d6 (4/1 [v/v])
Sample concentration: ca. 60 mg/0.6 mL
Measurement temperature: 120°C
Window function: exponential (BF: 1.0 Hz)
Chemical shift reference: δδ signal (29.73 ppm)

[Iodine value]

The iodine value of the copolymer was determined by measuring the iodine value (g/100 g) of the following ethylene·propylene·5-ethylidene-2-norbornene copolymer rubber in accordance with JIS K 0070:1992.

[Melt flow rate (MFR)]

The MFR of the sliding composition obtained below was measured at 230°C under a load of 10 kgf in accordance with ASTM D1238.

The MFR of the raw material (co)polymer used in the following Examples and Comparative Examples was also measured at 230°C or 190°C under a load of 2.16 kgf in accordance with JIS K 7210.

[Shore D hardness (after 5 seconds)]

In accordance with ISO 7619, an injection-molded square plate with a thickness of 3 mm was fabricated using the sliding composition obtained below. Using a laminate sheet of 6 mm in thickness in which the two fabricated injection-molded square plates with a thickness of 3 mm in thickness were stacked together, the Shore D hardness of the square plates was measured with a Shore D hardness tester. Regarding the Shore D hardness, the measurement value after 5 seconds.

[Tensile properties (tensile strength at break and elongation at break)]

Using a 50 ton press machine, a press sheet of 2 mm in thickness was fabricated from the sliding composition obtained below (apparatus conditions: preheating (190°C) for 8 minutes and press (190°C) for 6 minutes). For the press sheet of 3 mm in thickness fabricated, using a JIS No. 3 dumbbell, a tensile test was performed under the conditions of a measurement temperature of 25°C and tensile rates of 500 mm/min and 200 mm/min in accordance with JIS K 6251 to measure the tensile strength at break (TB) and tensile elongation at break (EB).

[Sliding properties (dynamic friction coefficient and abrasion loss)]

Using a soft thermoplastic elastomer material with JIS Duro A hardness of 70° (C700BM manufactured by Mitsui Chemicals, Inc.) as a substrate, the sliding composition obtained below was stacked on the substrate to a thickness of 200

μm using an extrusion molding machine to fabricate a two-layer sheet. A piece of glass with a thickness of 2 mm, tip radius R of 10 mm, and surface roughness Ra of 3.0 μm was attached on a surface of the two-layer sheet on the sliding composition side, and was allowed to slide 20,000 times under a load of 1 kg at a rate of 150 mm/sec and with an extent of stroke movement of 100 mm.

The coefficient of dynamic friction after sliding and the coefficient of dynamic friction before sliding were measured in accordance with ASTM D1894-63. The coefficient of dynamic friction after sliding being 0.25 or less can be said to be excellent in sliding properties.

The abrasion loss was calculated by weighing the mass (mg) of the sliding composition before and after sliding.

[Extrusion processability (adhesion of die drool)]

Using a soft thermoplastic elastomer material with JIS Duro A hardness of 70° (C700BM manufactured by Mitsui Chemicals, Inc.) as a substrate, the sliding composition obtained below was stacked on the substrate to a thickness of 200 to 250 μm using an extrusion molding machine to fabricate a two-layer sheet for consecutive 30 minutes.

After continuous molding for 30 minutes, the extrusion processability of the sliding composition was evaluated based on the following criteria.

O: No die drool of silicone adhered to the nozzle of the extrusion molding machine.

X: Die drool of silicone adhered to the nozzle of the extrusion molding machine.

[Extrusion processability (appearance after extrusion)]

For the two-layer sheet fabricated upon evaluation of sliding properties, irregularities on the surface of the sliding composition side before sliding were observed using a surface roughness tester (model: VR-5000, manufactured by KEYENCE CORPORATION), a comparative measurement module (model: VR-H3J, manufactured by KEYENCE CORPORATION), and a VR-5000 analysis application (manufactured by KEYENCE CORPORATION), and ten-point average roughness Rz of surface irregularities was calculated. An appearance after extrusion was evaluated based on the following criteria.

O: Rz is less than 30 μm
X: Rz is 30 μm or more

[Extrusion processability (swell)]

For pellets of the sliding composition obtained below, their swell value was measured at a shear rate of 122 $sec^{-1}$ after 6 minutes of preheating at a measurement temperature of 200°C, using a Strograph 1D type (orifice L/D = 30) manufactured by Toyo Seiki Seisaku-sho, Ltd.

[Adhesiveness]

The two-layer sheet fabricated upon evaluation of sliding properties was bonded by injection molding with a thermoplastic elastomer for injection bonding (Milastomer G800BS, manufactured by Mitsui Chemicals, Inc.) to fabricate a test specimen.

The adhesive interface of the obtained test specimen was repeatedly folded by 180°, and the number of folding repetitions until an end of the test specimen was notched or the test specimen was broken, was evaluated based on the following criteria.

O: 30 or more times of folding repetitions
X: Less than 30 times of folding repetitions

[Heat deterioration resistance]

Using a substrate A (C700BM manufactured by Mitsui Chemicals, Inc.) with JIS Duro A hardness of 70° and the amount of oil extension of 40 parts by mass of, or a substrate B (TS7000N manufactured by Mitsui Chemicals, Inc.) with JIS Duro A hardness of 70° and the amount of oil extended of 50 parts by mass, as substrates, the sliding composition obtained below was stacked on each substrate to a thickness of 200 μm using an extrusion molding machine to fabricate each two-layer sheet.

Each of the obtained two-layer sheets was heated at 85°C for 72 hours, and the surface of each two-layer sheet on the sliding composition side after heating was observed, and a change before and after heating was evaluated based on

the following criteria.

O: No change was observed in the two-layer sheet before and after heating.
X: A change whereby, for example, a bleeding substance could be confirmed on the surface of the two-layer sheet before and after heating, was observed.

<Material for use>

As the component (α) containing the ethylene/α-olefin/nonconjugated polyene copolymer (A), the following oil-extended rubber was used.

- Oil-extended rubber (α-1): Mitsui EPT (registered trademark) 3072EPM (manufactured by Mitsui Chemicals, Inc.)

The oil-extended rubber (α-1) is oil-extended ethylene·propylene·5-ethylidene-2-norbornene (ENB) copolymer rubber, and is a product in which the ethylene·propylene·ENB copolymer (A-1) (amount of oil extended of 40 parts by mass) with an ethylene content of 64% by mass (an ethylene content of 75.8 mol% and a propylene content of 24.2 mol% in terms of mole (a sum of ethylene and propylene is 100 mol%)); an ENB content of 5.4% by mass, iodine value of 11.5 g/100 g, intrinsic viscosity [η] measured in decalin at 135°C of 3.4 dl/g, and weight-average molecular weight of 280,000, was subjected to oil-extended treatment. The amount of oil extended of 40 parts by mass indicates that 40 parts by mass of a petroleum-based plasticizer (softener) is compounded to 100 parts by mass of the ethylene·propylene ·ENB copolymer (A-1).

- Oil-extended rubber (α-2): Mitsui EPT (registered trademark) 4100E (manufactured by Mitsui Chemicals, Inc.)

The oil-extended rubber (α-2) is oil-extended ethylene·propylene ·ENB copolymer rubber, and is a product in which the ethylene·propylene·ENB copolymer (A-2) (amount of oil extended of 50 parts by mass) with an ethylene content of 57% by mass (an ethylene content of 71 mol% and a propylene content of 29 mol% in terms of mole (a sum of ethylene and propylene is 100 mol%)), an ENB content of 7.3% by mass, iodine value of 15.4 g/100 g, intrinsic viscosity [η] measured in decalin at 135°C of 4.1 dl/g, and weight-average molecular weight of 470,000, was subjected to oil-extended treatment.

Oil-extended rubber (α-3): Mitsui EPT (registered trademark) X-3042 (manufactured by Mitsui Chemicals, Inc.)

The oil-extended rubber (α-3) is oil-extended ethylene·propylene ·ENB copolymer rubber, and is a product in which the ethylene·propylene·ENB copolymer (A-3) (amount of oil extended of 120 parts by mass) with an ethylene content of 67% by mass (an ethylene content of 77 mol% and a propylene content of 23 mol% in terms of mole (a sum of ethylene and propylene is 100 mol%)); an ENB content of 4.3% by mass, iodine value of 9.9 g/100 g, intrinsic viscosity [η] measured in decalin at 135°C of 4.3 dl/g, and weight-average molecular weight of 350,000, was subjected to oil-extended treatment.

As the propylene-based random copolymer (B1), the following copolymer was used.

- Copolymer (B1-1): Prime Polypro B241 (manufactured by Prime Polymer Co., Ltd.)

The copolymer (B1-1) is a crystalline resin of a propylene/ethylene random copolymer, and has an MFR (in accordance with JIS K 7210, 190°C, 2.16 kgf load) of 0.5 g/10 min and a density of 910 $kg/m^3$.

As the propylene homopolymer (B2), the following copolymer was used.

- Homopolymer (B2-1): Prime Polypro E200GP (manufactured by Prime Polymer Co., Ltd.)

The homopolymer (B2-1) has an MFR (in accordance with JIS K 7210, 190°C, 2.16 kgf load) of 2.0 g/10 min and a density of 900 $kg/m^3$.

- Homopolymer (B2-2): Prime Polypro E111G (manufactured by Prime Polymer Co., Ltd.)

The homopolymer (B2-2) has an MFR (in accordance with JIS K 7210, 190°C, 2.16 kgf load) of 0.5 g/10 min and a density of 910 $kg/m^3$.

As the high-density polyethylene (C1) and comparative high-density polyethylene (C1'), the following copolymers were used.

- Polyethylene (C1-1): HI-ZEX 8200B (manufactured by Prime Polymer Co., Ltd.)

The polyethylene (C1-1) has an MFR (in accordance with JIS K 7210, 190°C, 2.16 kgf load) of 0.03 g/10 min and a density of 952 kg/$m^3$.

- Polyethylene (C1'-1): HI-ZEX 5000S (manufactured by Prime Polymer Co., Ltd.)

The polyethylene (C1'-1) has an MFR (in accordance with JIS K 7210, 190°C, 2.16 kgf load) of 0.82 g/10 min and a density of 949 kg/$m^3$.

- Polyethylene (C1'-2): HI-ZEX 2200J (manufactured by Prime Polymer Co., Ltd.)

The polyethylene (C1'-2) has an MFR (in accordance with JIS K 7210, 190°C, 2.16 kgf load) of 5.20 g/10 min and a density of 964 kg/$m^3$.

As the ultra-high molecular weight polyethylene (C2) and comparative ultra-high molecular weight polyethylene (C2'), the following copolymers were used.

- Polyethylene (C2-1): MIPELON XM-220 (manufactured by Mitsui Chemicals, Inc.)

The polyethylene (C2-1) has an intrinsic viscosity [η] of 28.0 dl/g measured in decalin at 135°C, an average particle size $D_{50}$ of 30 μm, and a density of 938 kg/$m^3$.

- Polyethylene (C2'-1): MIPELON PM-200 (manufactured by Mitsui Chemicals, Inc.)

The polyethylene (C2'-1) has an average particle size $D_{50}$ of 10 μm and a density of 938 kg/$m^3$.

- Polyethylene (C2'-2): MIPELON XM-330 (manufactured by Mitsui Chemicals, Inc.)

The polyethylene (C2'-2) has a weight-average molecular weight of 2,000,000, an intrinsic viscosity [η] measured in decalin at 135°C of 28.5 dl/g, an average particle size $D_{50}$ of 65 μm, and a density of 938 kg/$m^3$.

As the silicone compound (D), the following silicone master batch or silicone oil was used.

- Compound (D-1): MB50-001 (manufactured by Dow Corning Toray Co., Ltd.)

The compound (D-1) is a silicone master batch, and is a pellet in which silicone gum with a kinematic viscosity of 1,000,000 cSt at 25°C was dispersed in polypropylene (the component (B3)), and the content of silicone gum is 50% by mass.

- Compound (D-2): KF96-60,000CS (manufactured by Shin-Etsu Chemical Co., Ltd.)

The compound (D-2) is a silicone oil with a kinematic viscosity of 60,000 cSt at 25°C.

- Compound (D-3): KF96-3000CS (manufactured by Shin-Etsu Chemical Co., Ltd.)

The compound (D-3) is a silicone oil with a kinematic viscosity of 3000 cSt at 25°C.

As the cross-linking agent, the following master batch of a phenolic resin-based cross-linking agent or an organic peroxide-based cross-linking agent was used.

- Phenolic resin-based cross-linking agent master batch (CL-1): A mixture of a phenolic resin-based cross-linking agent (SP-1055, manufactured by Schenectady Chemicals, Inc.) and zinc oxide (mass ratio = 10:1)
- Organic peroxide-based cross-linking agent master batch (CL-2): A mixture of an organic peroxide-based cross-linking agent (PERHEXA 25B, manufactured by NOF CORPORATION), divinylbenzene (DVB810, manufactured by NS Styrene Monomer Co., Ltd.), and the softener (E-1) described later (mass ratio = 5:2:3)

As other components, the following additives were used.

- Softener (E-1): Diana Process PW-90 (paraffin oil, manufactured by Idemitsu Kosan Co., Ltd.)
- Coloring agent: F32387MM (carbon black master batch, manufactured by DIC Corporation, mass ratio (% by mass):

polyethylene (component (C3) / carbon = 60/40))

- Antioxidant: AO-60 (phenolic antioxidant, manufactured by ADEKA CORPORATION)
- Ultraviolet absorber: Tinuvin 326FL (benzotriazole-based ultraviolet absorber, manufactured by BASF Japan Ltd.)
- Weathering stabilizer: Tinuvin 770 (hindered amine (HALS)-based weathering stabilizer, manufactured by BASF Japan Ltd.)
- Other additive: ALFLOW P10 (fatty acid amide, manufactured by NOF CORPORATION)

<Production of thermoplastic elastomer (EL)>

[Production Example 1]

Forty-six point nine percentage by mass of oil-extended rubber (α-1) (33.3% by mass as the copolymer (A-1)), 11.7% by mass of homopolymer (B2-1), 8.4% by mass of homopolymer (B2-2), 2.95% by mass of phenolic resin-based cross-linking agent master batch (CL-1) as a cross-linking agent, 0.07% by mass of antioxidant, 0.07 parts by mass of ultraviolet absorber, 0.03% by mass of weathering stabilizer, 1.3% by mass of carbon black master batch, and 28.5% by mass of softener (E-1) were thoroughly mixed in a Henschel mixer, extruded and kneaded under the following conditions to produce a thermoplastic elastomer (EL1) in which the copolymer (A) was at least partially cross-linked with the phenolic resin-based cross-linking agent.

It is to be noted that the content (% by mass) of each component (A), (B2), and (E) relative to 100.0% by mass of the obtained thermoplastic elastomer is shown in Table 1 as a composition ratio.

(Kneading conditions)

Extruder: Model No. KTX-46, manufactured by Kobe Steel, Ltd.
Cylinder temperature: C1 to C2 120°C, C3 to C4 140°C, C5 to C14 200°C
Die temperature: 200°C
Screw rotation speed: 400 rpm
Extrusion rate: 80 kg/h

[Production Examples 2 to 4]

Thermoplastic elastomers (EL2) to (EL4) were obtained in the same manner as in Production Example 1, except that the types and amounts of each component in Production Example 1 were changed as shown in Table 1.

In each of the thermoplastic elastomers (EL2) and (EL3), the copolymer (A) was at least partially cross-linked with the phenolic resin-based cross-linking agent, and the thermoplastic elastomer (EL4) was obtained in which the copolymer (A) was at least partially cross-linked with the organic peroxide-based cross-linking agent.

[Table 1]

**Table 1**

| | | | Production Example 1 | Production Example 2 | Production Example 3 | Production Example 4 |
|---|---|---|---|---|---|---|
| Thermoplastic elastomer | | | EL1 | EL2 | EL3 | EL4 |
| Amount compounded (% by mass) | Oil-extended rubber | α-1 | 46.9 | | | 48.1 |
| | | α-2 | | 49.6 | | |
| | | α-3 | | | 73.8 | |
| | Propylene homopolymer | B2-1 | 11.7 | 11.7 | 11.7 | 12.0 |
| | | B2-2 | 8.4 | 8.4 | 8.4 | 8.6 |
| | Softener | E-1 | 28.5 | 25.8 | 1.7 | 29.2 |

(continued)

| | | | Production Example 1 | Production Example 2 | Production Example 3 | Production Example 4 |
|---|---|---|---|---|---|---|
| Thermoplastic elastomer | | | EL1 | EL2 | EL3 | EL4 |
| | Cross-linking agent | CL-1 | 2.95 | 2.95 | 2.95 | |
| | | CL-2 | | | | 0.55 |
| | Coloring agent | | 1.3 | 1.3 | 1.3 | 1.4 |
| | Antioxidant | | 0.07 | 0.07 | 0.07 | 0.07 |
| | Ultraviolet absorber | | 0.07 | 0.07 | 0.07 | 0.07 |
| | Weathering stabilizer | | 0.03 | 0.03 | 0.03 | 0.03 |
| Composition ratio (% by mass) | Ethylene/α-olefin/nonconjugated polyene copolymer (A) | | 33.3 | 33.2 | 33.2 | 34.1 |
| | Propylene homopolymer (B2) | | 20.1 | 20.1 | 20.1 | 20.6 |
| | Softener (E) | | 42.1 | 42.2 | 42.2 | 43.1 |

<Production of sliding composition>

[Example 1]

Twenty-two point two percentage by mass of the thermoplastic elastomer (EL1) obtained in Production Example 1, 9.1% by mass of copolymer (B1-1), 9.1% by mass of homopolymer (B2-2), 31.6% by mass of polyethylene (C1-1), 10.6% by mass of polyethylene (C2-1), 8.5% by mass of silicone compound (D-1), 2.4% by mass of silicone compound (D-3), 0.05% by mass of antioxidant, 0.18 parts by mass of ultraviolet absorber, 0.05% by mass of weathering stabilizer, 4.5% by mass of carbon black master batch, and 1.82% by mass of fatty acid amide were thoroughly mixed in a Henschel mixer, extruded and kneaded under the following conditions to obtain pellets of a sliding composition. Various physical properties of the molded body produced using pellets of the obtained composition were evaluated according to the above-described method. Table 3 shows the results.

It is to be noted that the content (% by mass) of each of the components (A), (B1), (B2), (C1), (C2), (D) and (E) relative to 100.0% by mass of the obtained sliding composition are shown in Table 3 as a composition ratio.

(Kneading conditions)

Extruder: Model No. KTX-46, manufactured by Kobe Steel, Ltd.
Cylinder temperature: C1 to C2 120°C, C3 to C4 140°C, C5 to C14 200°C
Die temperature: 200°C
Screw rotation speed: 400 rpm
Extrusion rate: 80 kg/h

[Examples 2 to 8 and Comparative Examples 1 to 9]

Pellets of the sliding compositions were produced in the same manner as in Example 1, except that the types and amounts of each component were changed as shown in Table 2. Various physical properties of each molded body produced using pellets of the obtained composition were evaluated according to the above-described methods. Table 3 shows the results.

[Table 2]

**Table 2**

| | | | Example 1 | Example 2 | Example 3 | Example 4 | Example 5 | Example 6 | Example 7 | Example 8 |
|---|---|---|---|---|---|---|---|---|---|---|
| Amount compounded (% by mass) | Thermoplastic elastomer | EL1 | 22.2 | 22.2 | | | 22.9 | 22.9 | 22.1 | 22.9 |
| | | EL2 | | | 22.2 | | | | | |
| | | EL3 | | | | 22.2 | | | | |
| | | EL4 | | | | | | | | |
| | Propylene-based random copolymer | B1-1 | 9.1 | 6.1 | 9.1 | 9.1 | 10.7 | 10.7 | 10.3 | 10.7 |
| | Propylene homopolymer | B2-2 | 9.1 | 12.1 | 9.1 | 9.1 | 9.4 | 9.4 | 9.0 | 9.4 |
| | High-density polyethylene | C1-1 | 31.6 | 31.6 | 31.6 | 31.6 | 32.6 | 30.6 | 29.4 | 28.6 |
| | | C1'-1 | | | | | | | | |
| | | C1'-2 | | | | | | | | |
| | Ultra-high molecular weight polyethylene | C2-1 | 10.6 | 10.6 | 10.6 | 10.6 | 10.9 | 12.8 | 12.5 | 14.8 |
| | | C2'-1 | | | | | | | | |
| | | C2'-2 | | | | | | | | |
| | Silicone compound | D-1 | 8.5 | 8.5 | 8.5 | 8.5 | 6.6 | 6.6 | 6.3 | 6.6 |
| | | D-2 | | | | | 0.8 | 0.8 | 0.8 | 0.8 |
| | | D-3 | 2.4 | 2.4 | 2.4 | 2.4 | 3.1 | 3.1 | 3.0 | 3.1 |
| | Coloring agent | | 4.5 | 4.5 | 4.5 | 4.5 | 0.9 | 0.9 | 4.5 | 0.9 |
| | Antioxidant | | 0.05 | 0.05 | 0.05 | 0.05 | 0.05 | 0.05 | 0.05 | 0.05 |
| | Ultraviolet absorber | | 0.18 | 0.18 | 0.18 | 0.18 | 0.19 | 0.19 | 0.18 | 0.19 |
| | Weathering stabilizer | | 0.05 | 0.05 | 0.05 | 0.05 | 0.05 | 0.05 | 0.05 | 0.05 |
| | Other additive | | 1.82 | 1.82 | 1.82 | 1.82 | 1.88 | 1.88 | 1.81 | 1.88 |

(continued)

| | | | Comparative Example 1 | Comparative Example 2 | Comparative Example 3 | Comparative Example 4 | Comparative Example 5 |
|---|---|---|---|---|---|---|---|
| Amount compounded (% by mass) | Thermoplastic elastomer | EL1 | 22.2 | 22.2 | 22.2 | 22.2 | |
| | | EL2 | | | | | |
| | | EL3 | | | | | |
| | | EL4 | | | | | 22.2 |
| | Propylene-based random copolymer | B1-1 | 18.2 | | 9.1 | 9.1 | 9.1 |
| | Propylene homopolymer | B2-2 | | 18.2 | 9.1 | 9.1 | 9.1 |
| | High-density polyethylene | C1-1 | 31.6 | 31.6 | | | 31.6 |
| | | C1'-1 | | | 31.6 | | |
| | | C1'-2 | | | | 31.6 | |
| | Ultra-high molecular weight polyethylene | C2-1 | 10.6 | 10.6 | 10.6 | 10.6 | 10.6 |
| | | C2'-1 | | | | | |
| | | C2'-2 | | | | | |
| | Silicone compound | D-1 | 8.5 | 8.5 | 8.5 | 8.5 | 8.5 |
| | | D-2 | | | | | |
| | | D-3 | 2.4 | 2.4 | 2,4 | 2.4 | 2,4 |
| | Coloring agent | | 4.5 | 4.5 | 4.5 | 4.5 | 4.5 |
| | Antioxidant | | 0.05 | 0.05 | 0.05 | 0.05 | 0.05 |
| | Ultraviolet absorber | | 0.18 | 0.18 | 0.18 | 0.18 | 0.18 |
| | Weathering stabilizer | | 0.05 | 0.05 | 0.05 | 0.05 | 0.05 |
| | Other additive | | 1.82 | 1.82 | 1.82 | 1.82 | 1.82 |

Table 2 (continued)

| | | | Comparative Example 6 | Comparative Example 7 | Comparative Example 8 | Comparative Example 9 |
|---|---|---|---|---|---|---|
| Amount compounded (% by mass) | Thermoplastic elastomer | EL1 | 22.2 | 22.2 | 22.4 | 23.1 |
| | | EL2 | | | | |
| | | EL3 | | | | |
| | | EL4 | | | | |
| | Propylene-based random copolymer | B1-1 | 9.1 | 9.1 | 10.5 | 10.8 |
| | Propylene homopolymer | B2-2 | 9.1 | 9.1 | 9.2 | 9.5 |
| | High-density polyethylene | C1-1 | 31.6 | 31.6 | 31.9 | 32.9 |
| | | C1'-1 | | | | |
| | | C1'-2 | | | | |
| | Ultra-high molecular weight polyethylene | C2-1 | | | 10.7 | 11.0 |
| | | C2'-1 | 10.6 | | | |
| | | C2'-2 | | 10.6 | | |
| | Silicone compound | D-1 | 8.5 | 8.5 | 7.7 | 4.2 |
| | | D-2 | | | 1.0 | 0.6 |
| | | D-3 | 2.4 | 2.4 | 3.6 | 2.0 |
| | Coloring agent | | 4.5 | 4.5 | 0.9 | 0.9 |
| | Antioxidant | | 0.05 | 0.05 | 0.05 | 0.05 |
| | Ultraviolet absorber | | 0.18 | 0.18 | 0.18 | 0.19 |
| | Weathering stabilizer | | 0.05 | 0.05 | 0.05 | 0.05 |
| | Other additive | | 1.82 | 1.82 | 1.84 | 1.90 |

[Table 3]

**Table 3**

| | | | Example 1 | Example 2 | Example 3 | Example 4 | Example 5 | Example 6 | Example 7 | Example 8 |
|---|---|---|---|---|---|---|---|---|---|---|
| Amount compounded (% by mass) | Ethylene/α-olefin/nonconjugated polyene copolymer (A) | | 7.3 | 7.3 | 7.3 | 7.3 | 7.6 | 7.6 | 7.3 | 7.6 |
| | Propylene-based random copolymer (B1) | | 9.1 | 6.1 | 9.1 | 9.1 | 10.7 | 10.7 | 10.3 | 10.7 |
| | Propylene homopolymer (B2) | | 13.5 | 16.5 | 13.5 | 13.5 | 14.0 | 14.0 | 13.5 | 14.0 |
| | High-density polyethylene (C1) | | 31.6 | 31.6 | 31.6 | 31.6 | 32.6 | 30.6 | 29.4 | 28.6 |
| | Ultra-high molecular weight polyethylene (C2) | | 10.6 | 10.6 | 10.6 | 10.6 | 10.9 | 12.8 | 12.5 | 14.8 |
| | Silicone compound (D) | | 6.6 | 6.6 | 6.6 | 6.6 | 7.2 | 7.2 | 7.0 | 7.2 |
| | Softener (E) | | 9.3 | 9.3 | 9.4 | 9.4 | 9.6 | 9.6 | 9.3 | 9.6 |
| Evaluation | MFR(g/10 min) | | 16 | 15 | 15 | 15 | 25 | 30 | 25 | 20 |
| | Shore D hardness | | 48 | 48 | 48 | 48 | 46 | 47 | 47 | 49 |
| | Tensile strength at break (MPa) | | 15 | 14 | 16 | 15 | 14 | 14 | 15 | 14 |
| | Tensile elongation at break (%) | | 90 | 80 | 100 | 100 | 60 | 50 | 80 | 50 |
| | Coefficient of dynamic friction | Before sliding | 0.12 | 0.12 | 0.12 | 0.12 | 0.11 | 0.12 | 0.12 | 0.12 |
| | | After sliding | 0.20 | 0.20 | 0.20 | 0.20 | 0.18 | 0.19 | 0.19 | 0.20 |
| | Abrasion loss (mg) | | 0.1 | 0.1 | 0.1 | 0.1 | 0.1 | 0.1 | 0.1 | 0.1 |
| | Adhesion of die drool | | O | O | O | O | O | O | O | O |
| | Appearance after extrusion | | O | O | O | O | O | O | O | O |
| | Swell | | 1.06 | 1.06 | 1.06 | 1.06 | 1.05 | 1.04 | 1.04 | 1.04 |
| | Adhesiveness | | O | O | O | O | O | O | O | O |
| | Heat deterioration resistance | Substrate A | O | O | O | O | O | O | O | O |
| | | Substrate B | O | O | O | O | O | O | O | O |

Table 3 (continued)

| | | | Comparative Example 1 | Comparative Example 2 | Comparative Example 3 | Comparative Example 4 | Comparative Example 5 |
|---|---|---|---|---|---|---|---|
| Amount compounded (% by mass) | Ethylene/α-olefin/nonconjugated polyene copolymer (A) | | 7.3 | 7.3 | 7.3 | 7.3 | 7.5 |
| | Propylene-based random copolymer (B1) | | 18.2 | 0 | 9 | 9 | 9.1 |
| | Propylene homopolymer (B2) | | 4.4 | 22.6 | 13.5 | 13.5 | 13.5 |
| | High-density polyethylene (C1) | | 31.6 | 31.6 | 0 | 0 | 31.6 |
| | Ultra-high molecular weight polyethylene (C2) | | 10.6 | 10.6 | 10.6 | 10.6 | 10.6 |
| | Silicone compound (D) | | 6.6 | 6.6 | 6.6 | 6.6 | 6.6 |
| | Softener (E) | | 9.3 | 9.3 | 9.3 | 9.3 | 9.6 |
| Evaluation | MFR(g/10 min) | | 16 | 16 | 25 | 47 | 18 |
| | Shore D hardness | | 48 | 48 | 48 | 44 | 48 |
| | Tensile strength at break (MPa) | | 15 | 15 | 14 | 13 | 15 |
| | Tensile elongation at break (%) | | 120 | 30 | 80 | 20 | 100 |
| | Coefficient of dynamic friction | Before sliding | 0.12 | 0.12 | 0.12 | 0.12 | 0.12 |
| | | After sliding | 0.20 | 0.20 | 0.20 | 0.19 | 0.21 |
| | Abrasion loss (mg) | | 0.1 | 0.1 | 0.1 | 0.1 | 0.1 |
| | Adhesion of die drool | | X | O | O | O | O |
| | Appearance after extrusion | | O | X | X | X | O |
| | Swell | | 1.05 | 1.13 | 1.03 | 1.01 | 1.03 |
| | Adhesiveness | | O | O | O | O | O |
| | Heat deterioration resistance | Substrate A | O | O | O | O | X |
| | | Substrate B | O | O | O | O | X |

Table 3 (continued)

| | | | Comparative Example 6 | Comparative Example 7 | Comparative Example 8 | Comparative Example 9 |
|---|---|---|---|---|---|---|
| Amount compounded (% by mass) | Ethylene/α-olefin/nonconjugated polyene copolymer (A) | | 7.3 | 7.3 | 7.4 | 7.6 |
| | Propylene-based random copolymer (B1) | | 9.1 | 9.1 | 10.5 | 10.8 |
| | Propylene homopolymer (B2) | | 13.5 | 13.5 | 13.7 | 14.1 |
| | High-density polyethylene (C1) | | 31.6 | 31.6 | 31.9 | 32.9 |
| | Ultra-high molecular weight polyethylene (C2) | | 0 | 0 | 10.7 | 11.0 |
| | Silicone compound (D) | | 6.6 | 6.6 | 8.5 | 4.7 |
| | Softener (E) | | 9.3 | 9.3 | 9.4 | 9.7 |
| Evaluation | MFR(g/10 min) | | 17 | 15 | 17 | 15 |
| | Shore D hardness | | 48 | 48 | 47 | 48 |
| | Tensile strength at break (MPa) | | 15 | 15 | 13 | 14 |
| | Tensile elongation at break (%) | | 80 | 75 | 80 | 110 |
| | Coefficient of dynamic friction | Before sliding | 0.16 | 0.10 | 0.11 | 0.15 |
| | | After sliding | 0.31 | 0.19 | 0.18 | 0.27 |
| | Abrasion loss (mg) | | 0.1 | 0.1 | 0.1 | 0.5 |
| | Adhesion of die drool | | O | O | O | O |
| | Appearance after extrusion | | O | X | O | O |
| | Swell | | 1.06 | 1.06 | 1.04 | 1.04 |
| | Adhesiveness | | O | O | X | O |
| | Heat deterioration resistance | Substrate A | O | O | O | O |
| | | Substrate B | O | O | O | O |

## Claims

1. A sliding composition, comprising:

   7.0% by mass or more of an ethylene/α-olefin/nonconjugated polyene copolymer (A);
   6.0% by mass or more of a propylene-based random copolymer (B1) having a melt flow rate of 0.1 to 4.0 g/10 min measured at 190°C under a load of 2.16 kgf;
   10.0% by mass or more of a propylene homopolymer (B2) having a melt flow rate of 0.1 to 4.0 g/10 min measured at 190°C under a load of 2.16 kgf;
   15.0% by mass or more of high-density polyethylene (C1) having a density of 940 to 970 kg/$m^3$ and a melt flow rate of 0.1 g/10 min or less measured at 190°C under a load of 2.16 kgf;
   10.0% by mass or more of ultra-high molecular weight polyethylene (C2) having an intrinsic viscosity [η] of 10 to 40 dl/g, as measured in a decalin solvent at 135°C, an average particle size $D_{50}$ of 22 to 50 μm, and a density of less than 940 kg/$m^3$; and
   5.0 to 8.0% by mass of a silicone compound (D) having a kinematic viscosity of 3,000 to 1,000,000 cSt at 25°C,
   wherein a total content of components (A), (B1), (B2), (C1), (C2) and (D) is 100.0% by mass or less, and
   the ethylene/α-olefin/nonconjugated polyene copolymer (A) is at least partially cross-linked with a phenolic resin-based cross-linking agent.

2. The sliding composition according to claim 1, further comprising 0.1 to 10.0% by mass of a softener (E),

   wherein a total content of the components (A), (B1), (B2), (C1), (C2), (D) and (E) is 100.0% by mass or less, and the ethylene/α-olefin/nonconjugated polyene copolymer (A) has a weight-average molecular weight of 280,000 or more and an intrinsic viscosity [η] measured in decalin at 135°C of 3.4 dl/g or more, and when a total content of constituent units derived from ethylene and constituent units derived from an α-olefin is 100% by mass, a content of constituent units derived from ethylene is 70% by mass or less, and a content of constituent units derived from a nonconjugated polyene in all constituent units of the copolymer (A) is 6.0% by mass or less.

3. The sliding composition according to claim 1 or 2, wherein Shore D hardness 5 seconds after starting measurement measured in accordance with ISO 7619 is 30 to 60.

4. The sliding composition according to claim 1 or 2, wherein a content of the ethylene/α-olefin/nonconjugated polyene copolymer (A) is 7.0 to 10.0% by mass.

5. The sliding composition according to claim 1 or 2, wherein a total content of the propylene-based random copolymer (B1) and the propylene homopolymer (B2) is 20.0% by mass or more.

6. The sliding composition according to claim 1 or 2, wherein a content of the propylene-based random copolymer (B1) is 9.0 to 15.0% by mass, and the propylene-based random copolymer (B1) has a density of 900 to 920 kg/$m^3$.

7. The sliding composition according to claim 1 or 2, wherein a content of the propylene homopolymer (B2) is 10.0 to 18.0% by mass, and the propylene homopolymer (B2) has a density of 900 to 920 kg/$m^3$.

8. The sliding composition according to claim 1 or 2, wherein (B2)/(B1) that is a mass ratio of the propylene homopolymer (B2) to the propylene-based random copolymer (B1) is 1.0 to 3.0.

9. The sliding composition according to claim 1 or 2, wherein a content of the ultra-high molecular weight polyethylene (C2) is 10.0 to 30.0% by mass, and the ultra-high molecular weight polyethylene (C2) has an average particle size $D_{50}$ of 22 to 30 μm.

10. A molded body obtained by molding the sliding composition according to claim 1 or 2.

11. A glass run channel comprising the molded body according to claim 10.

12. A method for producing a sliding composition, the sliding composition comprising:

   7.0% by mass or more of an ethylene/α-olefin/nonconjugated polyene copolymer (A);
   6.0% by mass or more of a propylene-based random copolymer (B1) having a melt flow rate of 0.1 to 4.0 g/10 min

measured at 190°C under a load of 2.16 kgf;
10.0% by mass or more of a propylene homopolymer (B2) having a melt flow rate of 0.1 to 4.0 g/10 min measured at 190°C under a load of 2.16 kgf;
15.0% by mass or more of high-density polyethylene (C1) having a density of 940 to 970 kg/$m^3$ and a melt flow rate of 0.1 g/10 min or less measured at 190°C under a load of 2.16 kgf;
10.0% by mass or more of ultra-high molecular weight polyethylene (C2) having an intrinsic viscosity [η] of 10 to 40 dl/g, as measured in a decalin solvent at 135°C, an average particle size $D_{50}$ of 22 to 50 μm, and a density of less than 940 kg/$m^3$; and
5.0 to 8.0% by mass of a silicone compound (D) having a kinetic viscosity of 3,000 to 1,000,000 cSt at 25°C,
wherein a total content of the components (A), (B1), (B2), (C1), (C2) and (D) is 100.0% by mass or less, and the ethylene/α-olefin/nonconjugated polyene copolymer (A) is at least partially cross-linked,
the method comprising the step of cross-linking the ethylene/α-olefin/nonconjugated polyene copolymer (A) at least partially with a phenol resin-based cross-linking agent.

**INTERNATIONAL SEARCH REPORT**

International application No. **PCT/JP2023/033350**

**A. CLASSIFICATION OF SUBJECT MATTER**

***C08L 23/06***(2006.01)i; ***B60J 10/76***(2016.01)i; ***C08J 3/24***(2006.01)i; ***C08L 23/10***(2006.01)i; ***C08L 23/16***(2006.01)i; ***C08L 23/26***(2006.01)i; ***C08L 83/04***(2006.01)i

FI: C08L23/06; C08L23/10; C08L23/16; C08L23/26; C08L83/04; B60J10/76; C08J3/24 Z CES; C08J3/24 CFH

According to International Patent Classification (IPC) or to both national classification and IPC

**B. FIELDS SEARCHED**

Minimum documentation searched (classification system followed by classification symbols)

C08L; B60J

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2015-189774 A (SHIN ETSU POLYMER CO., LTD.) 02 November 2015 (2015-11-02) claims, paragraphs [0012], [0088], [0107], table 3, example 3 | 1-5, 8-12<br>6, 7 |
| Y | JP 2018-123178 A (TORAY IND., INC.) 09 August 2018 (2018-08-09) paragraph [0121] | 1-5, 8-12 |
| Y | JP 8-283494 A (OTSUKA CHEM. CO., LTD.) 29 October 1996 (1996-10-29) claims, paragraph [0012], examples | 1-5, 8-12 |
| Y | JP 2007-125715 A (THE FURUKAWA ELECTRIC CO., LTD.) 24 May 2007 (2007-05-24) paragraph [0044] | 1-5, 8-12 |
| Y<br>A | WO 2018/180362 A1 (MITSUI CHEMICALS, INC.) 04 October 2018 (2018-10-04) claims, paragraphs [0009], [0016], [0025], [0026], [0074], examples | 1-5, 8-12<br>6, 7 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/033350**

**C. DOCUMENTS CONSIDERED TO BE RELEVANT**

| Category* | Citation of document, with indication, where appropriate, of the relevant passages | Relevant to claim No. |
|---|---|---|
| Y | JP 2021-172705 A (OILES IND. CO., LTD.) 01 November 2021 (2021-11-01) claims, paragraph [0020] | 1-5, 8-12 |
| Y | WO 2020/189633 A1 (MITSUI CHEMICALS, INC.) 24 September 2020 (2020-09-24) claims, paragraph [0060] | 1-5, 8-12 |
| Y | JP 2019-127528 A (MITSUI CHEMICALS, INC.) 01 August 2019 (2019-08-01) claims, paragraph [0056] | 1-5, 8-12 |
| A | JP 5-4308 A (MITSUI PETROCHEM. IND., LTD.) 14 January 1993 (1993-01-14) entire text | 1-12 |
| A | JP 2001-225415 A (MITSUI CHEMICALS, INC.) 21 August 2001 (2001-08-21) entire text | 1-12 |

Form PCT/ISA/210 (second sheet) (January 2015)

**INTERNATIONAL SEARCH REPORT**
**Information on patent family members**

International application No.
**PCT/JP2023/033350**

| Patent document cited in search report | Publication date (day/month/year) | Patent family member(s) | Publication date (day/month/year) |
|---|---|---|---|
| JP 2015-189774 A | 02 November 2015 | (Family: none) | |
| JP 2018-123178 A | 09 August 2018 | (Family: none) | |
| JP 8-283494 A | 29 October 1996 | (Family: none) | |
| JP 2007-125715 A | 24 May 2007 | (Family: none) | |
| WO 2018/180362 A1 | 04 October 2018 | US 2020/0010653 A1<br>claims, paragraphs [0009], [0021]-[0025], [0034], [0035], [0093], examples<br>EP 3604423 A1<br>CN 110494483 A<br>KR 10-2019-0112132 A | |
| JP 2021-172705 A | 01 November 2021 | US 2023/0183459 A1<br>claims, paragraph [0025]<br>EP 4141278 A1<br>CN 115427498 A | |
| WO 2020/189633 A1 | 24 September 2020 | US 2022/0153972 A1<br>claims, paragraph [0088]<br>EP 3943300 A1<br>CN 113573904 A<br>KR 10-2021-0135263 A<br>TW 202045609 A | |
| JP 2019-127528 A | 01 August 2019 | (Family: none) | |
| JP 5-4308 A | 14 January 1993 | US 5302463 A<br>entire text<br>EP 510936 A2<br>KR 10-1992-0019534 A<br>CN 1066024 A | |
| JP 2001-225415 A | 21 August 2001 | US 6589664 B1<br>entire text<br>EP 1095764 A2<br>TW I233395 B<br>KR 10-2001-0051221 A<br>CN 1294049 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10193985 A
- JP 2015189088 A
- JP 6976862 B
- JP H971617 A
- JP H971618 A
- JP H9208615 A
- JP H1067823 A
- JP H1067824 A
- JP H10110054 A
- WO 2009081792 A
- WO 2009081794 A
- JP H940586 A
- WO 2009072553 A
- JP 2011052231 A
- US 4311628 A
- US 2972600 A
- US 3287440 A
- US 3709840 A
- US 3093613 A


### Non-patent literature cited in the description


- Polymer Analysis Handbook. Asakura Publishing Co., Ltd., 2008, 184-211
- Polymer Production Process. Kogyo Chosakai Publishing Co., Ltd.